# EUROPEAN PATENT SPECIFICATION

(11) **EP 3 972 775 B1**
(45) Date of publication and mention of the grant of the patent: **14.08.2024**
(21) Application number: 20724359.3
(22) Date of filing: 20.04.2020
(51) Int. Cl.: B23K 35/02, B22D 11/00, B23K 35/28, B22D 7/02, B22D 21/00, B32B 15/01, C22C 21/00, C22C 21/02, B22D 7/00, C22C 21/10, F28F 21/08, B22D 11/049

(54) **ALUMINUM ALLOYS FOR FLUXLESS BRAZING APPLICATIONS, METHODS OF MAKING THE SAME, AND USES THEREOF**
ALUMINIUMLEGIERUNGEN FÜR FLUSSMITTELFREIE LÖTANWENDUNGEN, VERFAHREN ZU DEREN HERSTELLUNG UND DEREN VERWENDUNG
ALLIAGES D'ALUMINIUM POUR APPLICATIONS DE BRASAGE SANS FLUX, LEURS PROCÉDÉS DE PRÉPARATION ET UTILISATIONS ASSOCIÉES

(30) Priority: 19.05.2019 US 201962849938 P
(43) Date of publication of application: 30.03.2022
(73) Proprietor: Novelis, Inc., Atlanta, GA 30326 (US)
(72) Inventor: KADALI, Jyothi, Kennesaw, GA 30144 (US)
(74) Representative: Weickmann & Weickmann PartmbB
(86) International application number: PCT/US2020/028933
(87) International publication number: WO 2020/236373

(56) References cited:
- WO-A1-2010/000666
- WO-A1-2013/068539
- WO-A1-2013/180630
- WO-A1-2017/080771
- WO-A2-02/090031
- JP-A- 2011 219 831
- US-A1- 2003 121 572
- US-A1- 2014 272 460
- US-B1- 7 255 932

## Description

### FIELD

The present invention relates to the fields of material science, material chemistry, metallurgy, aluminum alloys, aluminum fabrication, and related fields. More specifically, the present invention relates to novel clad aluminum alloys for fluxless brazing, and relates to methods of manufacturing the same. Additionally, the present invention relates to clad aluminum alloys that can be used in a variety of brazing applications, including, for example, in heat exchangers.

### BACKGROUND

Aluminum alloys have become an important material source for automotive parts (e.g., heat exchangers) due to their high strength, resistance to corrosion, high thermal conductivity, and light weight. Consequently, aluminum alloys are increasingly used to make heat exchangers, which are incorporated in air conditioners, automobiles, and the like. However, in processes used for fabricating aluminum parts (e.g., brazing in an automotive heat exchanger), the stability of the surface oxide film present on metal parts results in unstable brazing joints. During brazing, the oxide film acts as a barrier to wetting and flow of the filler metal required for joint formation. Commonly, oxide removal and prevention of re-oxidation are required for conventional aluminum joining methods.

For joining aluminum alloy parts to other metal parts (e.g., copper-containing parts, aluminum-containing parts, steel parts, etc.), flux-brazing methods are often used in which brazing is performed by using a molten cladding layer composed of an aluminum-silicon alloy. In this process, a fluoride-based flux is applied onto the cladding layer followed by heating in a non-oxidizing environment (e.g., under a nitrogen gas atmosphere). However, in flux-brazing methods, if the flux application amount is insufficient, there is a risk that oxide films present on the surfaces of metal parts will be insufficiently broken down. To remove the oxide film, automotive parts (e.g., heat exchangers) pass through a cleaning/etching process to achieve uniform flux coating. In addition to the harmful etchants used for the flux coating process, the flux slurries often include volatile polar solvents such as alcohols. These solvents are used in relatively large quantities, resulting in increased cost and inefficiency of the brazing process.

Additionally, the use of volatile organic compounds presents environmental and safety concerns.

Although some brazing methods produce a sound joint, there is a need for improved clad aluminum alloys and brazing processes that can produce a sound brazing joint with other metal parts without the use of flux.

EP3261797 discloses a multi-layered brazing sheet material having a 3xxx-series aluminium core alloy layer provided with a 4xxx-series brazing clad layer material on at least one face of said aluminium core layer and an inter-layer inter-positioned between the aluminium core alloy layer and brazing clad layer material, wherein the 4xxx-series brazing clad layer material comprises 6% to 14% Si, up to 2% Mg, up to 0.7% Fe, up to 0.3% Mn, up to 0.25% Cu, up to 1% Zn, others each <0.05%, total <0.2%, remainder aluminium.

EP3174710 discloses a multi-layered brazing sheet material consisting of an aluminium core alloy layer provided with a first brazing clad layer material on one face of said aluminium core layer and a second brazing clad layer material on the other face of said aluminium core material, and an inter-layer on either side of the core layer positioned between the aluminium core alloy layer and the first brazing clad layer material and/or second brazing clad layer material, wherein the first brazing clad layer material and the second brazing clad layer material are made from an 4xxx-series aluminium alloy having 6% to 14% Si, up to 0.35% Mg, up to 0.6 % Fe, up to 0.1% Mn, up to 0.08% Cu, up to 0.20% Zn, others each <0.05%, total <0.2%, remainder aluminium, ideally for use in a CAB process, or in an alternative embodiment, wherein the first and the second brazing clad liner are each made from an 4xxx-series aluminium alloy having 6% to 10.5% Si, up to 0.5% Mg, up to 0.5% Bi (or Y), up to 0.6 % Fe, up to 0.1% Mn, up to 0.08% Cu, up to 0.20% Zn, others each <0.05%, total <0.2%, remainder aluminium.

The present invention is disclosed in the appended claims.

In some embodiments, the heat exchanger is an automotive heat exchanger. In some embodiments, the automotive heat exchanger is a radiator, a condenser, an evaporator, an oil cooler, an inter cooler, a charge air cooler or a heater core. In some embodiments, a tube is made of the clad aluminum alloy product described herein.

### BRIEF DESCRIPTION OF DRAWINGS

Fig. 1 is an optical microscope image of a braze joint at 100x magnification using a Keyence microscope according to one embodiment.
Fig. 2 is an optical microscope image of a braze joint at 100x magnification using a Zeiss Optical microscope according to one embodiment.
Fig. 3 is a graph of the yield strength, ultimate elongation, and elongation of example aluminum alloys described herein.
Fig. 4 is a graph of the post-brazing yield strength, ultimate elongation, and elongation of the example aluminum alloys described herein.
Fig. 5 is a schematic representation of the results of metallographic examinations of sea water acetic acid tested (SWAAT) samples for Example Alloys 1, 3-7, 12-14, and Comparative Example A after 2 weeks, 3 weeks, and 4 weeks, as presented in Table 9.

### DETAILED DESCRIPTION

Described herein are clad aluminum alloy products comprising an aluminum alloy core layer and at least one aluminum alloy cladding layer. These aluminum materials, including a core layer and at least one cladding layer, can be referred to as "clad aluminum alloy products." The clad aluminum alloy products described herein can be fabricated as sheets (or other products), with the cladding layer on one or both sides of the core layer to form a sheet (or other product), in which case the materials can be referred to as "clad sheet aluminum alloy products," "clad aluminum sheets," "clad sheet alloys," or by other related terms, in singular or plural. The term "clad aluminum alloy" or "clad aluminum alloy product" and similar terms used herein are broader in scope than the term "clad sheet aluminum alloy" and similar terms. In other words, clad sheet aluminum alloys are a subset of clad aluminum alloy products.

Clad aluminum alloy products, including clad sheet aluminum alloys, can possess various compositions and properties. Some of these properties may be conferred by the chemical composition of the core and cladding layer(s), while other properties may be conferred by the manufacturing or fabrication processes used in the production or fabrication of the clad aluminum alloy products.

In processes for joining aluminum alloy products to other metal parts (e.g., aluminum, steel, copper parts, etc.), an oxide film present on the metal parts has long been recognized as a detriment to forming stable braze joints. Chemical cleaning of the parts to be joined is typically required to remove thick oxide films, followed by the use of a separate corrosive flux during braze bonding. Use of the flux removes the oxide, allowing the molten brazing alloy to contact an oxide-free surface to form the required joint. However, while the use of a flux is an aid to wetting and flowing, its subsequent complete removal is difficult and in many cases impossible. Any flux trapped in the final joint can be detrimental from both a strength and corrosion standpoint. Specifically, good braze joints are necessary in heat exchangers to achieve high mechanical strength, corrosion resistance, and leak-free heat exchangers. The present aluminum alloy compositions provide aluminum alloys for use as cladding layers, which have the capacity to form a brazed joint without using a corrosive flux.

The composition of cladding layer(s) of the clad aluminum alloy products described herein includes promoter agents that interface with the oxide film on the surface of the metal part to be joined to the clad aluminum alloy product to reduce or remove the oxide film without the need for flux. The combination of promoter agents in the cladding layer(s) of the clad aluminum alloy products reduces the oxide film on the metal part to be joined, thereby enabling fluxless brazing. Additionally, the promoter agents in the composition of the cladding layer(s) improve the ability of the molten cladding layer(s) to wet and conform to the base metal surface and, as a result, when cooled below its solidus temperature, to form a strong bond to the base metal. The cladding layer(s) has a synergistic combination of elements that, when in the molten state, influences viscosity of the molten cladding layer(s), reduces surface tension of the molten cladding layer(s), and promotes wetting of the metal part to be joined to the clad aluminum alloy products.

The clad aluminum alloy products described herein are suitable for use in fabrication or manufacturing processes that can require the joining of a surface of the clad aluminum alloy products to another metal surface by brazing. The clad aluminum alloy products can be used in industrial applications, including in heat exchangers, or in other applications. In a heat exchanger, the cladding layer(s) of the clad aluminum alloy product forms brazing joints for components of the heat exchanger (e.g., a tube to which the core alloy is attached). Brazing is a metal joining process in which a clad aluminum alloy product is heated above a melting point and distributed between two or more close-fitting parts by capillary action. When the clad aluminum alloy products described herein are used in a brazing process, the cladding layer(s) melt and become a filler metal that flows by capillary action to points of contact between the components being brazed. It is to be understood that it is not necessary for both or all parts being joined for brazing to be made of a clad aluminum alloy. At least in some cases, it is sufficient for only one part of those parts being joined to be made of a clad aluminum alloy. For example, a clad tube stock can be joined to a non-clad fin alloy in a radiator or an evaporator. In another non-limiting example, a clad fin can be joined to a non-clad extrusion tube in a condenser. The uses of the clad aluminum alloys in brazing and the related processes and resulting products, such as the objects fabricated according to the manufacturing processes that involve brazing, are generally referred to as "brazing applications."

The cladding layer(s) of the clad aluminum alloy products described herein exhibit improved wetting and flow required for joint formation in brazing applications by controlling the melting of the filler material, promoting pore formation in an oxide film layer of the metal to be joined, and transporting promoter agents to interface and/or remove the oxide film on the metal part during brazing applications. Specifically, the clad aluminum alloy products (e.g., one or both cladding layers) include specific amounts of magnesium (Mg), bismuth (Bi), antimony (Sb), strontium (Sr), sodium (Na), titanium (Ti), and/or other constituents (referred to herein as promoter agents) that result in a product that is especially useful as a filler alloy for fluxless brazing applications (e.g., as clad aluminum alloys for use in combination with copper or aluminum alloy tubes in heat exchangers). For example, low amounts of Mg (e.g., less than 0.50 wt. %), in combination with Bi, Sb, Sr, Na, and/or Ti, synergistically work to crack the surface oxide layer on the metal part to be joined such that the melted clad aluminum alloy (e.g., filler) flows through the cracks to form stable braze joints without the use of flux. The promoter agents break down the oxide film exposed on the surface of metal parts allowing the joint surfaces between components to be filled by the molten cladding layer(s) to form a stable joint. The promoter agents (e.g., Mg, Bi, Sb, Sr, Na, and/or Ti) break, and in some cases, extract the oxygen from the oxide film on the surface of a metal part that interferes with the formation of continuous and defect free braze joints.

### Definitions and Descriptions:

The terms "invention," "the invention," "this invention," and "the present invention" used herein are intended to refer to the subject matter of the claims below.

In this description, reference is made to alloys identified by aluminum industry designations, such as "series" or "1xxx." For an understanding of the number designation system most commonly used in naming and identifying aluminum and its alloys, see "International Alloy Designations and Chemical Composition Limits for Wrought Aluminum and Wrought Aluminum Alloys" or "Registration Record of Aluminum Association Alloy Designations and Chemical Compositions Limits for Aluminum Alloys in the Form of Castings and Ingot," both published by The Aluminum Association.

As used herein, the meaning of "a," "an," or "the" includes singular and plural references unless the context clearly dictates otherwise.

As used herein, a plate generally has a thickness of greater than about 15 mm. For example, a plate may refer to an aluminum product having a thickness of greater than about 15 mm, greater than about 20 mm, greater than about 25 mm, greater than about 30 mm, greater than about 35 mm, greater than about 40 mm, greater than about 45 mm, greater than about 50 mm, or greater than about 100 mm.

As used herein, a shate (also referred to as a sheet plate) generally has a thickness of from about 4 mm to about 15 mm. For example, a shate may have a thickness of about 4 mm, about 5 mm, about 6 mm, about 7 mm, about 8 mm, about 9 mm, about 10 mm, about 11 mm, about 12 mm, about 13 mm, about 14 mm, or about 15 mm.

As used herein, a sheet generally refers to an aluminum product having a thickness of less than about 4 mm. For example, a sheet may have a thickness of less than about 4 mm, less than about 3 mm, less than about 2 mm, less than about 1 mm, less than about 0.5 mm, less than about 0.3 mm, or less than about 0.1 mm.

Reference is made in this application to alloy temper or condition. For an understanding of the alloy temper descriptions most commonly used, see "American National Standards (ANSI) H35 on Alloy and Temper Designation Systems." An F condition or temper refers to an aluminum alloy as fabricated. An O condition or temper refers to an aluminum alloy after annealing. An Hxx condition or temper, also referred to herein as an H temper, refers to an aluminum alloy after cold rolling with or without thermal treatment (e.g., annealing). Suitable H tempers include HX1, HX2, HX3 HX4, HX5, HX6, HX7, HX8, or HX9 tempers. For example, the aluminum alloy can be cold rolled only to result in a possible H19 temper. In a further example, the aluminum alloy can be cold rolled and annealed to result in a possible H23 temper.

As used herein, "electrochemical potential" refers to a material's amenability to a redox reaction. Electrochemical potential can be employed to evaluate resistance to corrosion of the aluminum alloy products described herein. A negative value can describe a material that is easier to oxidize (e.g., a material that loses electrons or increases in oxidation state) when compared to a material with a positive electrochemical potential. A positive value can describe a material that is easier to reduce (e.g., a material that gains electrons or decreases in oxidation state) when compared to a material with a negative electrochemical potential. Electrochemical potential, as used herein, is a vector quantity expressing magnitude and direction.

As used herein, the meaning of "room temperature" can include a temperature of from about 15 °C to about 30 °C, for example about 15 °C, about 16 °C, about 17 °C, about 18 °C, about 19 °C, about 20 °C, about 21 °C, about 22 °C, about 23 °C, about 24 °C, about 25 °C, about 26 °C, about 27 °C, about 28 °C, about 29 °C, or about 30 °C.

All ranges disclosed herein are to be understood to encompass any and all subranges subsumed therein. For example, a stated range of "1 to 10" should be considered to include any and all subranges between (and inclusive of) the minimum value of 1 and the maximum value of 10; that is, all subranges beginning with a minimum value of 1 or more, e.g., 1 to 6.1, and ending with a maximum value of 10 or less, e.g., 5.5 to 10.

As used herein, the term "controlled atmosphere brazing" or "CAB" refers to a brazing process which utilizes an inert atmosphere, for example, nitrogen, argon or helium in the brazing process.

As used herein, "filler" refers to a clad aluminum alloy that is melted above its liquidus temperature used to braze the core to other metal articles.

The following aluminum alloys are described in terms of their elemental composition in weight percentage (wt. %) based on the total weight of the alloy. The remainder is aluminum, with a maximum wt. % of 0.15 % for the sum of the impurities.

### Clad Aluminum Alloy Products

The terms "cladding," "clad," "cladding layer," "clad layer," and the related terms are used generally to refer to a relatively thin surface layer of clad aluminum alloy products. The terms "core," "core layer," and the related terms are used to refer to a relatively thicker layer of clad aluminum alloy products. In some examples, a clad aluminum alloy product (e.g., a clad sheet aluminum alloy) can have cladding layers on both sides of the core layer, in which case a core layer is indeed an internal layer of the aluminum material. However, a clad aluminum alloy product (e.g., a clad sheet aluminum alloy) can alternatively have a cladding layer on only one side of the core layer, in which case the core layer can also be on a surface. The core layer and cladding layer(s) typically have different chemical compositions. In some cases, a clad aluminum alloy product can have two different cladding layers with different compositions and properties.

It is to be understood that clad aluminum alloy products suitable for brazing applications do not necessarily contain only a core layer and one or two cladding layers. Clad aluminum alloy products can contain other layers (e.g., to form multilayer aluminum materials), some of which may be referred to as "interlayers," "outer layers," "liners," and by other related terms. For example, clad aluminum alloy products can have 2, 3, 4, 5, 6 or more distinct layers, each having a certain function. More generally, clad aluminum alloy products can have as many layers as can be stacked and bonded together in one or more operations. In the commercial context, one possible limiting factor is the cost of production and/or scrap generated during production of clad aluminum alloy products, which can become too high with the increased number of layers for the clad aluminum alloy products to be commercially viable. In the context of clad aluminum alloy products suitable for brazing applications, one or more of the cladding layers can be the portion of the product that melts during a braze cycle. A liner can be a layer that is not expected to melt during a braze cycle and may confer some other benefits, such as corrosion resistance or increased strength, to the clad aluminum alloy products. A core can also include multiple layers, such as one or more interlayers on one or both sides of the main core layer.

In some embodiments, the clad aluminum alloy products include a core layer and at least one cladding layer. In some cases, the clad aluminum alloy products include a core layer, a first cladding layer, and a second cladding layer. In these cases, the first cladding layer can be adjacent to and contact the first side of the core layer to form a first interface (i.e., no layers intervene between the first cladding layer and the first side of the core layer). The second cladding layer can be adjacent to and contact the second side of the core layer to form a second interface (i.e., no layers intervene between the second cladding layer and the second side of the core layer). The first cladding layer and the second cladding layer may each comprise the alloy compositions described herein. In some embodiments, the core layer is clad on only one side. In other embodiments, the core layer is clad on both sides. In other embodiments, the core layer is clad on one side of the core layer and a water sideliner or other layer is placed on the other side of the core layer.

The composition of one or more of the cladding layer(s) of the clad aluminum alloy products includes promoter agents (e.g., Mg, Bi, Sb, Sr, Na, Ti, etc.) that interface with the oxide film on the surface of the metal part to be joined to the clad aluminum alloy product to reduce or remove the oxide film without the need for flux. The combination of promoter agents in the cladding layer(s) of the clad aluminum alloy products reduces the aluminum oxide film, thereby enabling fluxless brazing of the products. For example, the cladding layer(s) of the clad aluminum alloy products described herein melt and flow over a narrow range of temperatures to break and fill the oxide film on the surface of the metal part to be joined to the clad aluminum alloy product to form a sound metallurgical joint.

The cladding layer(s) of the clad aluminum alloy product melts and becomes the filler metal that flows by capillary action to points of contact between the components being brazed. The promoter agents in the composition of the cladding layer(s) improve the ability of the molten cladding layer(s) to wet and conform to the base metal surface and, as a result, when cooled below its solidus temperature, to form a strong bond to that metal. Additionally, the composition of the cladding layer(s) also exhibits improved flowability of the molten cladding layer(s) (e.g., the distance molten cladding layer will travel in the molten state away from its original position due to the action of capillary forces). The cladding layer(s) of the clad aluminum alloy products does not suffer any appreciable increase in its liquidus temperature even though its composition may be altered by dissolution of the base metal. This is important in aluminum brazing since the brazing operation is generally performed very near the liquidus temperature. In some embodiments, the wettability and flowability are functions of both the molten cladding layer(s) and the core layer of the clad aluminum alloy products.

The clad aluminum alloy products and methods described herein can be used in industrial applications including sacrificial parts, filler parts, heat dissipation, packaging, and building materials. In some embodiments, the clad aluminum alloy products described herein can be employed in aluminum alloy parts for heat exchangers. Specifically, the clad aluminum alloy products described herein can form brazed joints between aluminum alloy parts and/or other metal parts (e.g., copper parts) in a heat exchanger without the need for a fluxing operation. Suitable cladding layers and core layers for use in such clad aluminum alloy products are described below.

### Cladding Layer(s)

Provided herein are novel aluminum alloys. In one embodiment, the aluminum alloys can be used as one or more cladding layers, in combination with a core layer, to form a clad aluminum alloy product as described herein. The resulting clad aluminum alloy products are suitable for use in a variety of applications, including for use as a corrosion resistant brazing sheet package in manufacturing tubing.

An aluminum alloy for optional use as a cladding layer described herein can have the following elemental composition as provided in Table 1 (not according to the invention).

**Table 1**

| **Element** | **Weight Percentage (wt. %)** |
|---|---|
| Si | 7.0 - 14.0 |
| Fe | 0.05 - 1.0 |
| Cu | 0.01 - 0.60 |
| Mn | 0.01 - 0.30 |
| Mg | 0.01 - 0.50 |
| Zn | 0.0 - 0.60 |
| Bi | 0.001 - 0.50 |
| Sb | 0.0 - 0.30 |
| Sr | 0.0 - 0.20 |
| Na | 0.0 - 0.20 |
| Ti | 0.0 - 0.25 |
| Others | 0 - 0.05 (each) |
| | 0 - 0.15 (total) |
| Al | Remainder |

A further aluminum alloy for optional use as a cladding layer described herein can have the following elemental composition as provided in Table 2 (not according to the invention).

**Table 2**

| **Element** | **Weight Percentage (wt. %)** |
|---|---|
| Si | 8.0 - 12.0 |
| Fe | 0.10 - 0.90 |
| Cu | 0.01 - 0.50 |
| Mn | 0.05 - 0.20 |
| Mg | 0.01 - 0.40 |
| Zn | 0.05 - 0.40 |
| Bi | 0.01 - 0.40 |
| Sb | 0.0 - 0.25 |
| Sr | 0.0 - 0.15 |
| Na | 0.0 - 0.10 |
| Ti | 0.0 - 0.20 |
| Others | 0 - 0.05 (each) |
| | 0 - 0.15 (total) |
| Al | Remainder |

Another aluminum alloy for optional use as a cladding layer described herein can have the following elemental composition as provided in Table 3 (not according to the invention).

**Table 3**

| **Element** | **Weight Percentage (wt. %)** |
|---|---|
| Si | 8.5 - 11.0 |
| Fe | 0.15 - 0.50 |
| Cu | 0.01 - 0.40 |
| Mn | 0.05 - 0.15 |
| Mg | 0.05 - 0.30 |
| Zn | 0.10 - 0.30 |
| Bi | 0.05 - 0.30 |
| Sb | 0.0 - 0.20 |
| Sr | 0.0 - 0.10 |
| Na | 0.0 - 0.06 |
| Ti | 0.0 - 0.15 |
| Others | 0 - 0.05 (each) |
| | 0 - 0.15 (total) |
| Al | Remainder |

The aluminum alloy for optional use as a cladding layer described herein has the following elemental composition as provided in Table 4.

**Table 4**

| **Element** | **Weight Percentage (wt. %)** |
|---|---|
| Si | 9.0 - 10.5 |
| Fe | 0.15 - 0.25 |
| Cu | 0.30 - 0.40 |
| Mn | 0.05 - 0.15 |
| Mg | 0.15 - 0.30 |
| Zn | 0.15 - 0.30 |
| Bi | 0.10 - 0.35 |
| Sb | 0.0 - 0.15 |
| Sr | 0.0 - 0.05 |
| Na | 0.0 - 0.05 |
| Ti | 0.0 - 0.10 |
| Others | 0 - 0.05 (each) |
| | 0 - 0.15 (total) |
| Al | Remainder |

Another aluminum alloy for optional use as a cladding layer described herein can have the following elemental composition as provided in Table 5 (not according to the invention).

**Table 5**

| **Element** | **Weight Percentage (wt. %)** |
|---|---|
| Si | 9.5 - 10.5 |
| Fe | 0.30 - 0.50 |
| Cu | 0.01 - 0.05 |
| Mn | 0.05 - 0.15 |
| Mg | 0.01 - 0.05 |
| Zn | 0.20 - 0.25 |
| Bi | 0.10 - 0.20 |
| Sb | 0.01 - 0.05 |
| Sr | 0.001 - 0.02 |
| Na | 0.0 - 0.01 |
| Ti | 0.0 - 0.10 |
| Others | 0 - 0.05 (each) |
| | 0 - 0.15 (total) |
| Al | Remainder |

The aluminum alloys include silicon (Si) at different concentrations to provide various melting ranges necessary for brazing applications. The disclosed alloy includes Si in an amount from 9.0 % to 10.5 % based on the total weight of the alloy. For example, the alloy can include 9.0 %, 9.1 %, 9.2 %, 9.3 %, 9.4 %, 9.5 %, 9.6 %, 9.7 %, 9.8 %, 9.9 %, 10.0 %, 10.1 %, 10.2 %, 10.3 %, 10.4%, or 10.5 % Si.

All percentages are expressed in wt. %.

The aluminum alloys described herein include iron (Fe) in relatively small amounts in solid solution after processing. Fe can form intermetallic constituents which may contain Mn, Si, and other elements. It is beneficial to control the Fe content in the composition to avoid large constituents which do not contribute to the beneficial properties of the cladding layer of the clad aluminum alloy product. The alloy includes Fe in an amount from 0.15 % to 0.25 % based on the total weight of the alloy. For example, the alloy can include 0.15 %, 0.16 %, 0.17 %, 0.18 %, 0.19 %, 0.20 %, 0.21 %, 0.22 %, 0.23 %, 0.24 %, or 0.25 % Fe. All percentages are expressed in wt. %.

The aluminum alloys described herein include copper (Cu) to increase strength of an aluminum alloy. Depending on the concentration, Cu can have an effect on the corrosion resistance of, for example, a clad aluminum alloy product including the aluminum alloy as a cladding layer. For example, in the aluminum alloys according to some embodiments, Cu in solid solution can increase the corrosion resistance by lowering the spread between the corrosion potential of the matrix and the Si particles in the eutectic system. The disclosed alloy includes Cu in an amount from 0.30 % to 0.40 % based on the total weight of the alloy. For example, the alloy can include 0.30 %, 0.31 %, 0.32 %, 0.33 %, 0.34 %, 0.35 %, 0.36 %, 0.37 %, 0.38 %, 0.39 %, or 0.40 % Cu. All percentages are expressed in wt. %.

The alloy includes manganese (Mn) in an amount from 0.05 % to 0.15 % (e.g. from 0.10 % to 0.15 %) based on the total weight of the alloy. For example, the alloy can include 0.05 %, 0.06%, 0.07 %, 0.08 %, 0.09 %, 0.10 %, 0.11 %, 0.12 %, 0.13 %, 0.14 %, or 0.15 % Mn. All percentages are expressed in wt. %.

The aluminum alloys include low amounts of Mg to improve brazing performance when the alloy is used as a cladding layer in a clad aluminum alloy product. In brazing applications, Mg pulls out the oxygen in the oxide film layer and cracks the film such that it is no longer continuous. The low amounts of Mg provide good brazeability in a flux-free brazing method. The alloy includes Mg in an amount from 0.15 % to 0.30 % based on the total weight of the alloy. For example, the alloy can include 0.15 %, 0.16 %, 0.17 %, 0.18 %, 0.19 %, 0.20 %, 0.21 %, 0.22 %, 0.23 %, 0.24 %, 0.25 %, 0.26 %, 0.27 %, 0.28 %, 0.29 %, or 0.30 % Mg. All percentages are expressed in wt. %.

The alloy includes zinc (Zn) in an amount from 0.15 % to 0.30 % based on the total weight of the alloy. For example, the alloy can include 0.15 %, 0.16 %, 0.17 %, 0.18 %, 0.19 %, 0.20 %, 0.21 %, 0.22 %, 0.23 %, 0.24 %, 0.25 %, 0.26 %, 0.27 %, 0.28 %, 0.29 %, or 0.30 % Zn. All percentages are expressed in wt. %.

The alloy includes Bi in an amount from 0.10 % to 0.35 % based on the total weight of the alloy. For example, the alloy can include 0.10 %, 0.11 %, 0.12 %, 0.13 %, 0.14 %, 0.15 %, 0.16 %, 0.17 %, 0.18 %, 0.19 %, 0.20 %, 0.21 %, 0.22 %, 0.23 %, 0.24 %, 0.25 %, 0.26 %, 0.27 %, 0.28 %, 0.29 %, 0.30 %, 0.31 %, 0.32 %, 0.33 %, 0.34 %, or 0.35 % Bi.

All percentages are expressed in wt. %.

The alloy may optionally include Sb in an amount up to 0.15 % (e.g. from 0.01 % to 0.15 %) based on the total weight of the alloy. For example, the alloy can include 0.001 %, 0.002 %, 0.003 %, 0.004 %, 0.005 %, 0.006 %, 0.007 %, 0.008 %, 0.009 %, 0.01 %, 0.02 %, 0.03 %, 0.04 %, 0.05 %, 0.06 %, 0.07 %, 0.08 %, 0.09 %, t 0.10 %, 0.11 %, 0.12 %, 0.13 %, 0.14 %, or 0.15 % Sb. In some cases, Sb is not present in the alloy (i.e., 0 %). All percentages are expressed in wt. %.

The alloy may optionally include Sr in an amount up to 0.05 % (e.g. from 0.01 % to 0.05 %) based on the total weight of the alloy. For example, the alloy can include 0.001 %, 0.002 %, 0.003 %, 0.004 %, 0.005 %, 0.006 %, 0.007 %, 0.008 %, 0.009 %, 0.01 %, 0.02 %, 0.03 %, 0.04 %, or 0.05 % Sr. In some cases, Sr is not present in the alloy (i.e., 0 %). All percentages are expressed in wt. %.

The alloy may optionally include Na in an amount up to 0.05 % based on the total weight of the alloy. For example, the alloy can include 0.0001 %, 0.0002 %, 0.0003 %, 0.0004 %, 0.0005 %, 0.0006 %, 0.0007 %, 0.0008 %, 0.0009 %, 0.001 %, 0.002 %, 0.003 %, 0.004 %, 0.005 %, 0.006 %, 0.007 %, 0.008 %, 0.009 %, 0.01 %, 0.02 %, 0.03 %, 0.04 %, or 0.05 % Na. In some cases, Na is not present in the alloy (i.e., 0 %). All percentages are expressed in wt. %.

The alloy may optionally include Ti in an amount up to 0.10 % (e.g. from 0.01 % to 0.10 %) based on the total weight of the alloy. For example, the alloy can include 0.001 %, 0.002 %, 0.003 %, 0.004 %, 0.005 %, 0.006 %, 0.007 %, 0.008 %, 0.009 %, 0.01 %, 0.02 %, 0.03 %, 0.04 %, 0.05 %, 0.06 %, 0.07 %, 0.08 %, 0.09 %, or 0.10 % Ti. In some cases, Ti is not present in the alloy (i.e., 0 %). All percentages are expressed in wt. %. It was found that titanium in the aforementioned amounts can improve the wettability of the clad aluminum alloy in the molten state.

Optionally, the alloy compositions can further include other minor elements, sometimes referred to as impurities, in amounts of about 0.05 % or below, 0.04 % or below, 0.03 % or below, 0.02 % or below, or 0.01 % or below each. These impurities may include, but are not limited to, Ga, V, Ni, Sc, Ag, B, Zr, Li, Pb, Sn, Ca, Hf, or combinations thereof. Accordingly, Ga, V, Ni, Sc, Ag, B, Zr, Li, Pb, Sn, Ca, or Hf may be present in an alloy in amounts of 0.05 % or below, 0.04 % or below, 0.03 % or below, 0.02 % or below, or 0.01 % or below. The sum of all impurities does not exceed 0.15 % (e.g., 0.10 %). All percentages are expressed in wt. %. The remaining percentage of the alloy is aluminum.

The thickness of the cladding layer(s) can be from 1 micron to 100 microns. For example, the cladding layer(s) can be from 5 microns to 90 microns, from 10 microns to 80 microns, from 15 microns to 70 microns, from 20 microns to 60 microns, from 25 microns to 55 microns, from 30 microns to 50 microns, from 5 microns to 50 microns, from 10 microns to 40 microns, or from 15 microns to 35 microns.

The thickness of the cladding layer(s) can each be up to 40 % of the thickness of a core layer in a clad aluminum alloy product. For example, the cladding layer(s) can be 40 %, 39 %, 38 %, 37 %, 36 %, 35 %, 34 %, 33 %, 32 %, 31 %, 30 %, 29 %, 28 %, 27 %, 26 %, 25 %, 24 %, 23 %, 22 %, 21 %, 20 %, 19 %, 18 %, 17 %, 16.5 %, 16 %, 15.5 %, 15 %, 14.5 %, 14 %, 13.5 %, 13 %, 12.5 %, 12 %, 11.5 %, 11 %, 10.5 %, 10 %, 9.5 %, 9 %, 8.5 %, 8 %, 7.5 %, 7 %, 6.5 %, or 6% of the thickness of a core layer in a clad aluminum alloy product.

In some embodiments, the onset temperature of the cladding layer(s) is important for controlling the properties for the brazed joint. The onset temperature refers to a temperature at which the aluminum alloy, in this case, the cladding layer(s), begins to melt (i.e., the onset of melting). The cladding layer(s) described herein have an onset temperature which promotes good spread of the molten cladding layer(s) between the core layer and other components in an aluminum alloy product (e.g., an heat exchanger). If the onset temperature of the cladding layer(s) is high (e.g., greater than or at 600 °C), the ability to form good braze joints decreases because there is not sufficient spread of the molten cladding layer(s) to form solid joints. In some embodiments, the onset temperature of the cladding layer(s) is from about 500 °C to about 600 °C (e.g., about 510 °C to about 595 °C, about 525 °C to about 590 °C, about 540 °C to about 585 °C, from about 550 °C to about 580 °C, or from about 560 °C to about 575 °C). In some embodiments, the onset temperature of the cladding layer(s) is from about 560 °C to about 580 °C.

Additionally, cladding layer(s) having a low melting temperature exhibit increased flowability when molten. If the melting point of the cladding layer(s) is high, then the workability or ability to form good braze joints decreases because there is not enough molten cladding layer available to form solid joints. In some embodiments, the melting point of the cladding layer(s) is from about 600 °C to about 700 °C (e.g., about 610 °C to about 690 °C, about 615 °C to about 680 °C, about 620 °C to about 670 °C, from about 630 °C to about 660 °C, or from about 640 °C to about 665 °C). In some embodiments, one or more cladding layer(s) have different compositions, and therefore have different onset temperatures and melting points.

### Core Layer

The present disclosure further provides clad aluminum alloy products that include at least one clad aluminum alloy layer and a core layer. Core aluminum alloys can be alloys commonly described as a "lifelong core alloy," meaning that the core layer uses a mechanism to slow down the corrosion through the core. One example of such an alloy is described in U.S. Pat. No. 9,546,829. As discussed in U.S. Pat. No. 9,546,829, the higher Si content in the core alloy leads to formation of AlMnSi dispersoids resulting in dispersoid strengthening of the matrix. The results also show that the presence of Si leads to formation of an effective dense precipitate band (DPB), even at high Si content up to 0.4%, during brazing which leads to improved post braze corrosion resistance. Additionally, this patent discloses that the presence of high Fe content leads to higher post braze strength. Though higher Fe content may lead to deleterious corrosion behavior in the core layer, this effect was mitigated by adding Ti, producing Ti rich bands in the post-braze condition which improved corrosion behavior. Without being bound by theory, it was found that using the clad aluminum alloys described herein with a core aluminum alloy comprising Ti beneficially provided corrosion resistance to the brazing package.

In some embodiments, the core layer is a 3xxx series aluminum alloy or a 6xxx series aluminum alloy. Suitable 3xxx series aluminum alloys for use in the core layer described herein include, for example, AA3002, AA3102, AA3003, AA3103, AA3103A, AA3103B, AA3203, AA3403, AA3004, AA3004A, AA3104, AA3204, AA3304, AA3005, AA3005A, AA3105, AA3105A, AA3105B, AA3007, AA3107, AA3207, AA3207A, AA3307, AA3009, AA3010, AA3110, AA3011, AA3012, AA3012A, AA3013, AA3014, AA3015, AA3016, AA3017, AA3019, AA3020, AA3021, AA3025, AA3026, AA3030, AA3130, and AA3065.

Suitable 6xxx series aluminum alloys for use in the core layer described herein include, for example, AA6101, AA6101A, AA6101B, AA6201, AA6201A, AA6401, AA6501, AA6002, AA6003, AA6103, AA6005, AA6005A, AA6005B, AA6005C, AA6105, AA6205, AA6305, AA6006, AA6106, AA6206, AA6306, AA6008, AA6009, AA6010, AA6110, AA6110A, AA6011, AA6111, AA6012, AA6012A, AA6013, AA6113, AA6014, AA6015, AA6016, AA6016A, AA6116, AA6018, AA6019, AA6020, AA6021, AA6022, AA6023, AA6024, AA6025, AA6026, AA6027, AA6028, AA6031, AA6032, AA6033, AA6040, AA6041, AA6042, AA6043, AA6151, AA6351, AA6351A, AA6451, AA6951, AA6053, AA6055, AA6056, AA6156, AA6060, AA6160, AA6260, AA6360, AA6460, AA6460B, AA6560, AA6660, AA6061, AA6061A, AA6261, AA6361, AA6162, AA6262, AA6262A, AA6063, AA6063A, AA6463, AA6463A, AA6763, A6963, AA6064, AA6064A, AA6065, AA6066, AA6068, AA6069, AA6070, AA6081, AA6181, AA6181A, AA6082, AA6082A, AA6182, AA6091, and AA6092.

In some embodiments, the clad aluminum alloy products are corrosion resistant and provide a brazing package for use in manufacturing tubing for heat exchangers. In some embodiments, the clad aluminum alloy products comprise a core layer of aluminum-containing alloy comprising from about 0.10 wt. % to about 0.20 wt. % Ti.

The thickness of the core layer can be from about 100 microns to about 4000 microns. For example, the core layer can be from about 150 microns to about 3500 microns, from about 200 microns to about 3000 microns, from about 250 microns to about 2500 microns, from about 300 microns to about 2000 microns, from about 350 microns to about 1500 microns, from about 400 microns to about 1000 microns, from about 450 microns to about 900 microns, from about 500 microns to about 800 microns, or from about 550 microns to about 700 microns.

The alloys described above for use as the core layer are resistant to corrosion and have good mechanical properties. The alloys are formulated to produce a sacrificial band of dense precipitates at the first and second interfaces (i.e., between the core alloy and the first and second cladding layers). As used herein, sacrificial means that the dense precipitate band region will corrode in preference to the core layer. The dense precipitate band region can form during the braze cycle. This band prevents perforation of the tubes from the outside and enhances the corrosion resistance of the core layer, as described in U.S. Patent No. 5,041,343, U.S. Patent No. 5,037,707, U.S. Patent No. 6,019,939 and International Patent Publication No. WO 94/22633. The band of dense precipitate typically has a thickness of about 20-50 µm (e.g., about 25-40 µm).

### Brazing Sheet Package

A clad aluminum alloy product can be made from one or more cladding layer(s) and a core layer using any product method known to those of skill in the art. For example, the clad aluminum alloy product can be made by hot metal rolling or the like to bond the one or more cladding layer(s) to the core layer. The clad aluminum alloy product can be formed by fusion casting, as described in more detail below. Optionally, the clad aluminum alloy product can be made by a process including hot rolling and cold rolling a composite cast ingot as described in U.S. Published Patent Application No. 2005/0011630. The resulting clad aluminum alloy product provides good resistance to corrosion when brazed to metal parts.

In some embodiments, a clad aluminum alloy sheet, once formed, can be converted to tube form by any method of tube formation known to those of skill in the art. For example, the clad aluminum alloy sheet can be converted to tube form by folding or welding. The resulting tubes can be used, for example, in a heat exchanger. Optionally, a fin can be attached to the sheet or tube formed from the clad aluminum alloy sheet.

### Methods of Preparing and Processing

In certain aspects, the processes for making or fabricating the clad aluminum alloy products described herein, as well as for fabricating the objects using the clad aluminum alloy products are also included within the scope of the present disclosure. The clad aluminum alloy products described herein can be fabricated by processes that include at least some of the technological steps described and shown in this document. It is to be understood that descriptions and illustrations of the processes contained in this document are non-limiting. The process steps described herein can be combined and modified in various ways and suitably employed for fabricating the clad aluminum alloy products or forms and objects from such alloys. Process steps and conditions that are not explicitly described herein, yet commonly employed in the areas of metallurgy and aluminum processing and fabrication, can also be incorporated into the processes falling within the scope of the present disclosure. The process for preparing the cladding layer of the clad aluminum alloy product is described in more detail below.

### Casting

The cladding layer of the clad aluminum alloy product described herein can be cast using a casting method as known to those of skill in the art. For example, the casting process can include a direct chill (DC) casting process. The DC casting process is performed according to standards known to one of skill in the art. The DC process can provide an ingot. Optionally, the ingot can be scalped before downstream processing. Optionally, the casting process can include a continuous casting (CC) process instead of a DC casting process.

In some embodiments, the cladding layer of the clad aluminum alloy product can be cast using "fusion casting," which can be also referred to by the trade name FUSION^{™} (Novelis, Atlanta, US), and is described, for example, in U.S. Pat. No. 7,472,740. Generally, fusion casting is a process of casting of a composite or multilayer metal ingot. When casting by the FUSION^{™} (Novelis, Atlanta, US) process is employed for production of the clad aluminum alloy product described herein, an aluminum alloy for use as a cladding layer is solidified on one or both surfaces of a partially solidified core alloy. A fusion casting process typically uses a mold with a feed end and an exit end. The molten metal is added at the feed end, and a solidified ingot is extracted from the exit end of the mold. Divider walls are used to divide the feed end into at least two separate feed chambers.

The divider walls terminate above the exit end of the mold. Each feed chamber is adjacent to at least one other feed chamber. For each pair of adjacent feed chambers, a stream of a first alloy is fed to one of the pair of chambers to form a pool of metal in the first chamber. A stream of a second alloy is fed through the second of the pair of feed chambers to form a pool of metal in the second chamber. The first metal pool contacts the divider wall between the pair of chambers to cool the first pool, so as to form a self-supporting surface adjacent the divider wall. The second metal pool is then brought into contact with the first pool, so that the second pool first contacts the self-supporting surface of the first pool at a point where the temperature of the self-supporting surface is below the solidus temperature of the first alloy. The two alloy pools are joined as two layers and cooled to form a composite or multilayer ingot, which can be also referred to as "package." The multilayer ingot obtained by fusion casting is included within the scope of the clad aluminum alloy product described herein.

The cast aluminum alloy can then be subjected to further processing steps. For example, the processing methods as described herein can include the steps of homogenization, hot rolling, cold rolling, and/or annealing.

### Homogenization

The homogenization step can include heating a cast aluminum alloy as described herein to attain a homogenization temperature of about, or at least about, 570 °C (e.g., at least about 570 °C, at least about 580 °C, at least about 590 °C, at least about 600 °C, at least about 610 °C, or anywhere in between). For example, the cast aluminum alloy can be heated to a temperature of from about 570 °C to about 620 °C, from about 575 °C to about 615 °C, from about 585 °C to about 610 °C, or from about 590 °C to about 605 °C. In some cases, the heating rate to the homogenization temperature can be about 100 °C/hour or less, about 75 °C/hour or less, about 50 °C/hour or less, about 40 °C/hour or less, about 30 °C/hour or less, about 25 °C/hour or less, about 20 °C/hour or less, about 15 °C/hour or less, or about 10 °C/hour or less. In other cases, the heating rate to the homogenization temperature can be from about 10 °C/min to about 100 °C/min (e.g., about 10 °C/min to about 90 °C/min, about 10 °C/min to about 70 °C/min, about 10 °C/min to about 60 °C/min, from about 20 °C/min to about 90 °C/min, from about 30 °C/min to about 80 °C/min, from about 40 °C/min to about 70 °C/min, or from about 50 °C/min to about 60 °C/min).

In some embodiments, the cast aluminum alloy is then allowed to soak (i.e., held at the indicated temperature) for a period of time. According to one non-limiting example, the cast aluminum alloy is allowed to soak for up to about 5 hours (e.g., from about 10 minutes to about 5 hours, inclusively). For example, the cast aluminum alloy can be soaked at a temperature of at least 570 °C for 10 minutes, 20 minutes, 30 minutes, 1 hour, 2 hours, 3 hours, 4 hours, 5 hours, or anywhere in between.

In some embodiments, the cast aluminum alloy can be cooled from the first temperature to a second temperature that is lower than the first temperature. In some examples, the second temperature is greater than about 555 °C (e.g., greater than about 560 °C, greater than about 565 °C, greater than about 570 °C, or greater than about 575 °C). For example, the cast aluminum alloy can be cooled to a second temperature of from about 555 °C to about 590 °C, from about 560 °C to about 575 °C, from about 565 °C to about 580 °C, from about 570 °C to about 585 °C, from about 565 °C to about 570 °C, from about 570 °C to about 590 °C, or from about 575 °C to about 585 °C. The cooling rate to the second temperature can be from about 10 °C/min to about 100 °C/min (e.g., from about 20 °C/min to about 90 °C/min, from about 30 °C/min to about 80 °C/min, from about 10 °C/min to about 90 °C/min, from about 10 °C/min to about 70 °C/min, from about 10 °C/min to about 60 °C/min, from about 40 °C/min to about 70 °C/min, or from about 50 °C/min to about 60 °C/min).

In some embodiments, the cast aluminum alloy can then be allowed to soak at the second temperature for a period of time. In certain cases, the ingot is allowed to soak for up to about 5 hours (e.g., from 10 minutes to 5 hours, inclusively). For example, the ingot can be soaked at a temperature of from about 560 °C to about 590 °C for 10 minutes, 20 minutes, 30 minutes, 1 hour, 2 hours, 3 hours, 4 hours, 5 hours, or anywhere in between.

### Hot Rolling

Following the homogenization step, a hot rolling step can be performed. In certain cases, the cast aluminum alloys are hot-rolled with a hot mill entry temperature range of about 560 °C to about 600 °C. For example, the entry temperature can be about 560 °C, about 565 °C, about 570 °C, about 575 °C, about 580 °C, about 585 °C, about 590 °C, about 595 °C, or about 600 °C. In certain cases, the hot roll exit temperature can range from about 290 °C to about 350 °C (e.g., from about 310 °C to about 340 °C). For example, the hot roll exit temperature can be about 290 °C, about 295 °C, about 300 °C, about 305 °C, about 310 °C, about 315 °C, about 320 °C, about 325 °C, about 330 °C, about 335 °C, about 340 °C, about 345 °C, about 350 °C, or anywhere in between.

In certain cases, the cast aluminum alloy can be hot rolled to an about 2 mm to about 15 mm thick gauge (e.g., from about 2.5 mm to about 12 mm thick gauge). For example, the cast aluminum alloy can be hot rolled to an about 2 mm thick gauge, about 2.5 mm thick gauge, about 3 mm thick gauge, about 3.5 mm thick gauge, about 4 mm thick gauge, about 5 mm thick gauge, about 6 mm thick gauge, about 7 mm thick gauge, about 8 mm thick gauge, about 9 mm thick gauge, about 10 mm thick gauge, about 11 mm thick gauge, about 12 mm thick gauge, about 13 mm thick gauge, about 14 mm thick gauge, or about 15 mm thick gauge. In certain cases, the cast aluminum alloy can be hot rolled to a gauge greater than 15 mm (i.e., a plate). In other cases, the cast aluminum alloy can be hot rolled to a gauge less than 4 mm (i.e., a sheet).

### Cold Rolling

A cold rolling step can be performed following the hot rolling step. In certain aspects, the rolled product from the hot rolling step can be cold rolled to a sheet (e.g., below approximately 4.0 mm). In certain aspects, the rolled product is cold rolled to a thickness of about 0.4 mm to about 1.0 mm, about 1.0 mm to about 3.0 mm, or about 3.0 mm to less than about 4.0 mm. In certain aspects, the alloy is cold rolled to about 3.5 mm or less, about 3 mm or less, about 2.5 mm or less, about 2 mm or less, about 1.5 mm or less, about 1 mm or less, about 0.5 mm or less, about 0.4 mm or less, about 0.3 mm or less, about 0.2 mm or less, or about 0.1 mm or less. For example, the rolled product can be cold rolled to about 0.1 mm, about 0.2 mm, about 0.3 mm, about 0.4 mm, about 0.5 mm, about 0.6 mm, about 0.7 mm, about 0.8 mm, about 0.9 mm, about 1.0 mm, about 1.1 mm, about 1.2 mm, about 1.3 mm, about 1.4 mm, about 1.5 mm, about 1.6 mm, about 1.7 mm, about 1.8 mm, about 1.9 mm, about 2.0 mm, about 2.1 mm, about 2.2 mm, about 2.3 mm, about 2.4 mm, about 2.5 mm, about 2.6 mm, about 2.7 mm, about 2.8 mm, about 2.9 mm, about 3.0 mm, about 3.1 mm, about 3.2 mm, about 3.3 mm, about 3.4 mm, about 3.5 mm, about 3.6 mm, about 3.7 mm, about 3.8 mm, about 3.9 mm, about 4.0 mm, or anywhere in between.

In one case, the method for processing the aluminum alloys as described herein can include the following steps. A homogenization step can be performed by heating a cast aluminum alloy as described herein to attain a homogenization temperature of about 590 °C over a time period of about 12 hours, wherein the cast aluminum alloys are allowed to soak at a temperature of about 590 °C for about 2 hours. The cast aluminum alloys can then be cooled to about 580 °C and allowed to soak for about 2 hours at 580 °C. The cast aluminum alloys can then be hot rolled to a suitable gauge. The cast aluminum alloys can then be cold rolled to the desired gauge.

### Annealing

Optionally, the aluminum alloy can be annealed by heating the alloy from room temperature to an annealing temperature of from about 200 °C to about 400 °C (e.g., from about 210 °C to about 375 °C, from about 220 °C to about 350 °C, from about 225 °C to about 345 °C, or from about 250 °C to about 320 °C). In some cases, the heating rate to the annealing temperature can be about 100 °C/hour or less, about 75 °C/hour or less, about 50 °C/hour or less, about 40 °C/hour or less, about 30 °C/hour or less, about 25 °C/hour or less, about 20 °C/hour or less, about 15 °C/hour or less, or about 10 °C/hour or less. The alloy can soak at the temperature for a period of time. In certain aspects, the alloy is allowed to soak for up to approximately 6 hours (e.g., from about 10 seconds to about 6 hours, inclusively). For example, the alloy can be soaked at the temperature of from about 230 °C to about 370 °C for about 20 seconds, about 25 seconds, about 30 seconds, about 35 seconds, about 40 seconds, about 45 seconds, about 50 seconds, about 55 seconds, about 60 seconds, about 65 seconds, about 70 seconds, about 75 seconds, about 80 seconds, about 85 seconds, about 90 seconds, about 95 seconds, about 100 seconds, about 105 seconds, about 110 seconds, about 115 seconds, about 120 seconds, about 125 seconds, about 130 seconds, about 135 seconds, about 140 seconds, about 145 seconds, about 150 seconds, about 5 minutes, about 10 minutes, about 15 minutes, about 20 minutes, about 25 minutes, about 30 minutes, about 35 minutes, about 40 minutes, about 45 minutes, about 50 minutes, about 55 minutes, about 60 minutes, about 65 minutes, about 70 minutes, about 75 minutes, about 80 minutes, about 85 minutes, about 90 minutes, about 95 minutes, about 100 minutes, about 105 minutes, about 110 minutes, about 115 minutes, about 120 minutes, about 2.5 hours, about 3 hours, about 3.5 hours, about 4 hours, about 4.5 hours, about 5 hours, about 5.5 hours, about 6 hours, or anywhere in between. In some examples, the alloy is not annealed.

In some examples, the alloy is heated to an annealing temperature of about 200 °C to about 400 °C at a constant rate of about 40 °C/hour to about 50 °C/hour. In some aspects, the alloy is allowed to soak at the annealing temperature for about 3 hours to about 5 hours (e.g., for about 4 hours). In some cases, the alloy is cooled from the annealing temperature at a constant rate of about 40 °C/hour to about 50 °C/hour. In some examples, the alloy is not annealed.

### Properties and Advantages

The mechanical properties of the clad aluminum alloy product can be controlled by various processing conditions depending on the desired use. The clad aluminum alloy product can be produced (or provided) in an H temper (e.g., HX1, HX2, HX3 HX4, HX5, HX6, HX7, HX8, or HX9 tempers). As one example, clad aluminum alloy product can be produced (or provided) in the H19 temper. H19 temper refers to products that are cold rolled. As another example, the clad aluminum alloy product can be produced (or provided) in the H24 temper. H24 temper refers to products that are cold rolled and partially annealed. As a further example, the clad aluminum alloy product can be produced (or provided) in the O condition or temper.

In some non-limiting examples, the clad aluminum alloy product has high strength in the H tempers (e.g., H19 temper and H24 temper) and high formability (i.e., bendability) in the O temper. In some non-limiting examples, the clad aluminum alloy product has good corrosion resistance in the H tempers (e.g., H19 temper and H24 temper), and O temper compared to conventional clad aluminum alloy products.

The clad aluminum alloy products described herein can produce brazing joints that resist corrosion better than conventional cladding alloys without the use of corrosive flux. An advantage of the present clad aluminum alloy products is that the hardened filler alloy produced post-brazing can resist corrosion better than the hardened filler alloy produced by conventional cladding alloys. The improved corrosion resistance is due to the presence of the promoters in the cladding alloys used in the clad aluminum alloy products, in comparison to conventional cladding alloys. A few examples of such additional promoters that can beneficially affect the corrosion properties of the residual cladding, which can act as protective anti-corrosion coating in the parts and objects subjected to brazing, are Bi, Sb, Sr, Na and Ti. When present in specific quantities in the cladding layer(s) of the clad aluminum alloy products, there is no need for flux operation when brazing a joint between the clad aluminum alloy product and the metal part to be joined. This improves the corrosion potential of the clad aluminum alloy products since no flux operation is required when producing the braze joint which negatively affects the corrosion potential of the joint.

In certain aspects, the clad aluminum alloy products can have a corrosion resistance that provides a negative corrosion potential or electrochemical potential (Ecorr) from about -650 mV to about -760 mV (e.g., from about -660 mV to about -750 mV, from about -670 mV to about - 740 mV, from about -680 mV to about -730 mV, from about -690 mV to about -720 mV, from about -700 mV to about -710 mV, etc.) when tested according to the ASTM G69 standard. In certain cases, the negative corrosion potential or electrochemical potential (Ecorr) can be about - 650 mV, about -660 mV, about -670 mV, about -680 mV, about -690 mV, about -700 mV, about -710 mV, about -720 mV, about -730 mV, about -740 mV, about -750 mV, or about -760 mV, or anywhere in between.

In certain aspects, the clad aluminum alloy products, when in an H temper, can have a yield strength from about 150 MPa to about 250 MPa (e.g., from about 160 MPa to about 240 MPa, from about 165 MPa to about 225 MPa, from about 170 MPa to about 210 MPa, from about 170 MPa to about 200 MPa, from about 175 MPa to about 195 MPa, etc.). In certain cases, the clad aluminum alloy products, when in an H temper, can have a yield strength of about 160 MPa, about 165 MPa, about 170 MPa, about 175 MPa, about 180 MPa, about 185 MPa, about 190 MPa, about 195 MPa, about 200 MPa, about 205 MPa, about 210 MPa, about 215 MPa, about 220 MPa, about 225 MPa, about 230 MPa, about 235 MPa, about 240 MPa, about 245 MPa, or about 250 MPa.

In certain aspects, the clad aluminum alloy products, when in an H temper, can have an ultimate tensile strength from about 175 MPa to about 250 MPa (e.g., from about 180 MPa to about 240 MPa, from about 185 MPa to about 245 MPa, from about 190 MPa to about 240 MPa, from about 195 MPa to about 235 MPa, from about 200 MPa to about 230 MPa, etc.). In certain cases, the clad aluminum alloy products, when in an H temper, can have an ultimate tensile strength of about 175 MPa, about 180 MPa, about 185 MPa, about 190 MPa, about 195 MPa, about 200 MPa, about 205 MPa, about 210 MPa, about 215 MPa, about 220 MPa, about 225 MPa, about 230 MPa, about 235 MPa, about 240 MPa, about 245 MPa, or about 250 MPa.

In certain aspects, the clad aluminum alloy products, when in an H temper, can have an elongation from about 11 % to about 18 %, (e.g., from about 12 % to about 17.5 %, from about 12.5 % to about 17 %, from about 13 % to about 16.5 %, from about 14 % to about 16 %, etc.). In certain cases, the clad aluminum alloy products, when in an H temper, can have an elongation of about 11 %, about 11.5 %, about 12 %, about 12.5 %, about 13 %, about 13.5 %, about 14 %, about 14.5 %, about 15 %, about 15.5 %, about 16 %, about 16.5 %, about 17 %, about 17.5 %, or about 18 %.

It is contemplated that when the cladding layer of the clad aluminum alloy products forms a brazed joint, it will exhibit good corrosion resistance when subjected to accelerated air side corrosion tests. Specifically, brazing joints formed from the cladding layer of the clad aluminum alloy products described herein may exhibit a good air side corrosion rating when sea water acetic acid tests (SWAAT) are carried out according to ASTM G85:A3. For example, the clad aluminum alloy products can be subjected to SWAAT tests for 2 weeks, 3 weeks, and 4 weeks. In each of these examples, it is expected that minimal corrosion activity and no perforations will form in the clad aluminum alloy for at least 28 days.

### Methods of Brazing

The clad aluminum alloy products described herein are suitable for brazing applications without the use of flux. Surprisingly, it was found that the constituents in the cladding layer(s) of the clad aluminum alloy product penetrate the oxide film of a metal part to be joined to break or remove the surface oxide film, thereby entirely replacing the need for flux. Accordingly, various brazing processes and technological steps can be suitably employed in the embodiments of the present disclosure. In this method, the clad aluminum alloy products can be brazed in an inert gas atmosphere without using flux by incorporating amounts of Mg, Bi, Sb, Sr, Na, Ti, etc., in the alloy composition of the cladding layer to break and remove the oxide film on the surface of the metal part to be joined. Any suitable inert gas may be employed including, for example, argon, helium, nitrogen, etc. During the brazing application, the filler alloy formed by melting the cladding layer can flow and wet the cracked oxide film to form a structurally sound braze joint without using corrosive flux.

As such, the clad aluminum alloy products described herein are suitable for controlled atmosphere brazing ("CAB") without applying flux. For the brazing cycle, the clad aluminum alloy products can be heated in an inert atmosphere CAB furnace. In a brazing process using flux, elements in joint materials (base materials) and core materials are strictly controlled because certain elements react negatively with the flux. The alloy composition of the cladding layer described herein tolerates brazing of the clad aluminum alloy products to a variety of metal parts having different compositions since no flux operation is required. This makes it possible to use alloys which remain strong and corrosion resistant after brazing.

In some embodiments, the surface of the metal part to be joined to the clad aluminum alloy product is prepared (e.g., pretreatment) before brazing. In some embodiments, the metal part to be joined is subjected to one or more pretreatments which can be used to promote adhesion of the clad aluminum alloy product and the metal part. The adhesion of the clad aluminum alloy product to the metal part, for example the cladding layer of a clad aluminum alloy product, may be improved by pre-treating the outer surface of the metal part on which the clad aluminum alloy product is being deposited to produce good braze joints. In some embodiments, the pre-treatment includes a preliminary cleaning step during which the surface of the metal part is treated to remove grease, oil, buffing compounds, rolling lubricants or slitting oils. This can be accomplished in many ways, for example by vapor degreasing, solvent washing, solvent emulsion cleaning, mechanical grinding, or by mild etching.

In some embodiments, the surface of the metal part to be joined is etched to remove residual traces of oil and grease from rolling processes and to make the oxide film layer thinner. For example, the preparation process involves etching the surface of the metal part using a caustic cleaner (e.g., 10% NaOH) to remove all traces of oil or grease. In some embodiments, etching the surface can produce surface characteristics that are important to form a good braze joint. In particular, the surface roughness is an important property of the material surface and increased surface roughness can have more area for oxidation reactions and for oxide film layers. In some embodiments, mechanical grinding increases the surface roughness. The surface roughness can be from about 0.1 microns to 2.0 about microns (e.g., from about 0.2 microns to about 1.5 microns, from about 0.3 microns to about 1.0 microns, or from about 0.4 microns to about 0.8 microns) to yield good braze joints.

The brazing process is carried out in a dry atmosphere with little or no oxygen in the atmosphere. In some embodiments, the brazing process is carried out in an inert atmosphere of nitrogen, argon, or helium. The atmosphere in the CAB furnace may include less than 100 ppm oxygen, e.g., less than 90 ppm, less than 80 ppm, less than 70 ppm, less than 60 ppm, less than 50 ppm, less than 40 ppm, less than 30 ppm, less than 25 ppm, less than 20 ppm, less than 10 ppm, or less than 5 ppm oxygen. The lower concentration of oxygen prevents re-oxidation on the aluminum alloy part during the brazing process.

In some embodiments, the atmosphere in the CAB furnace can have a dew point of less than -30 °C, e.g., less than -32 °C, less than -34 °C, less than -36 °C, less than -38 °C, less than - 40 °C, less than -42 °C, less than -44 °C, less than -46 °C, less than -48 °C, less than -50 °C, less than -52 °C, less than -54 °C, less than -56 °C, less than -58 °C, less than -60 °C, less than -62 °C, less than -64 °C, less than -66 °C, less than -68 °C, or less than -70 °C. For example, the dew point in the CAB furnace can be from about -30 °C to about -70 °C, from about -35 °C to about -65 °C, from about -40 °C to about -60 °C, or from about -45 °C to about -55 °C.

The brazing process can include heating the clad aluminum alloy products as described herein to attain a brazing temperature of about, or at least about, 560 °C (e.g., at least about 570 °C, at least about 580 °C, at least about 590 °C, at least about 600 °C, at least about 610 °C, or anywhere in between). For example, the clad aluminum alloy product can be heated to a temperature of from about 560 °C to about 620 °C, from about 570 °C to about 615 °C, from about 580 °C to about 610 °C, or from about 590 °C to about 605 °C. In some cases, the heating rate to the brazing temperature can be about 200 °C/hour or less, about 180 °C/hour or less, about 160 °C/hour or less, about 140 °C/hour or less, about 120 °C/hour or less, about 100 °C/hour or less, about 75 °C/hour or less, about 50 °C/hour or less, about 40 °C/hour or less, about 30 °C/hour or less, about 25 °C/hour or less, about 20 °C/hour or less, about 15 °C/hour or less, or about 10 °C/hour or less. In other cases, the heating rate to the brazing temperature can be from about 10 °C/min to about 200 °C/min (e.g., about 10 °C/min to about 175 °C/min, about 10 °C/min to about 150 °C/min, about 10 °C/min to about 100 °C/min, from about 20 °C/min to about 90 °C/min, from about 30 °C/min to about 80 °C/min, from about 40 °C/min to about 70 °C/min, or from about 50 °C/min to about 60 °C/min). In some embodiments, the heating rate to peak temperature in the CAB furnace is less than 3 minutes.

In some embodiments, the clad aluminum alloy products can be heated in the CAB furnace at a rate of 100 °C per minute until a temperature of 520 °C is reached. The clad aluminum alloy products can then be heated at a rate of 25 °C per minute until a temperature of 605 °C is reached, followed by a 3-minute heat soak at 605 °C. The clad aluminum alloy products can then be cooled to 570 °C, and removed from the furnace to cool at room temperature. In some embodiments, the clad aluminum alloy product is heated for 3 minutes at 600° C in a CAB furnace under the brazing atmosphere in which the oxygen concentration is less than 50 ppm and dew point is less than -40° C (in a nitrogen atmosphere).

In some embodiments, a method of manufacturing an article, such as a heat exchanger, joined by brazing or an assembly of brazed components is provided. The method may include providing the components of which at least one is made from a clad aluminum alloy product described herein. The method may include assembling the components, such as corrugated fin stock material and other components such as tubes, into an assembly. The method may further include brazing the assembly without applying a brazing flux on the assembly of components. The whole assembly is brazed in a controlled inert gas atmosphere at a brazing temperature, typically at a temperature in a range of about 560° C to 620° C for a period long enough for melting and spreading of a filler joining the various components, e.g., a dwell time of 1 to 5 minutes. The oxygen content in the brazing atmosphere should be as low as reasonably possible, and is preferably below about 100 ppm, and more preferably below about 50 ppm, for example at 25 ppm or less. The method further includes cooling of the brazed assembly, typically to below about 100° C, e.g., to room temperature using, for example, blown air or any other suitable cooling medium.

In this operation, no flux is required to remove the oxide film from the metal part that is joined to the clad aluminum alloy product. At elevated temperatures for brazing, the constituents in the cladding layer of the clad aluminum alloy product remove or at least break open the oxide film during the brazing operation to allow the molten filler to come into contact with the metal part to form the joint. In certain aspects, the cladding layer of the clad aluminum alloy product is used as a filler alloy for a method of manufacturing an article, such as a heat exchanger, joined by brazing or an assembly of brazed components. Without intending to limit the disclosure, the alloy composition of the cladding layer of the clad aluminum alloy product controls the melting of the cladding layer to form the filler material, promotes pore formation in an oxide film of a metal part to be joined to the clad aluminum alloy product, and transports promoter agents to reduce or remove with the oxide film during brazing applications.

While metal parts such as aluminum alloy articles are described throughout the text, the methods and articles apply to any metal. In some examples, the metal part is aluminum, an aluminum alloy, magnesium, a magnesium-based material, titanium, a titanium-based material, copper, a copper-based material, steel, a steel-based material, bronze, a bronze-based material, brass, a brass-based material, a composite, a sheet used in composites, or any other suitable metal or combination of materials.

### Methods of Using

The clad aluminum alloy products and methods described herein can be used in industrial applications including sacrificial parts, heat dissipation, packaging, and building materials. Uses and applications of the clad aluminum alloy products described herein are included within the scope of the present invention, as are objects, forms, apparatuses and similar things fabricated with or comprising the clad aluminum alloy products described herein. The processes for fabricating, producing or manufacturing such objects, forms, apparatuses and similar things are also included within the scope of the present invention.

Some other exemplary objects that can be made with the products of the present invention are described and shown in U.S. Pat. No. 8,349,470. Some non-limiting examples of such objects are an evaporator plate, an evaporator, a radiator, a heater, a heater core, a condenser, condenser tubes, various tubes and pipes, a manifold, and some structural features, such as side supports. The uses of the clad aluminum alloy products disclosed herein are not limited to the processes that involve brazing cladding alloys onto core alloys or interlayer alloys. For example, cladding brazing aluminum alloys can be produced for filler rings made from drawn wire. In another example, clad aluminum alloy products produced in sheet form can be used as filler shim. The shim material can have a thickness anywhere from a few microns to a millimeter, depending on the application. The aluminum alloys described herein provide better corrosion performance and higher strength as compared to alloys currently employed.

The following examples will serve to further illustrate the present invention without, however, constituting any limitation thereof. On the contrary, it is to be clearly understood that resort may be had to various embodiments, modifications and equivalents thereof which, after reading the description herein, may suggest themselves to those skilled in the art without departing from the spirit of the invention. During the studies described in the following examples, conventional procedures were followed, unless otherwise stated. Some of the procedures are described below for illustrative purposes.

### EXAMPLES

### Example 1: Aluminum Alloy Compositions and Properties

Exemplary and comparative alloys, as shown in Table 6, were prepared according to the method described below. Alloys 1-14 are exemplary alloys for the cladding layer of the clad aluminum alloy product. Comparative Alloy A is a comparative alloy for a cladding layer.

**Table 6**

| **Alloy** | **Si** | **Fe** | **Cu** | **Mn** | **Mg** | **Zn** | **Bi** | **Sb** | **Sr** | **Na** | **Ti** |
|---|---|---|---|---|---|---|---|---|---|---|---|
| 1* | 11-12.5 | 0.15-0.25 | 0.01 | 0.05-0.15 | 0.05-0.15 | 0.15-0.30 | 0.001 | 0.01-0.03 | 0.02 | - | - |
| 2* | 9.5-10.5 | 0.15-0.25 | 0.01 | 0.05-0.15 | 0.05-0.15 | 0.15-0.30 | 0.08-0.12 | 0.01-0.03 | 0.02 | - | - |
| 3* | 9.5-10.5 | 0.15-0.25 | 0.30-0.40 | 0.05-0.15 | 0.05-0.15 | 0.15-0.30 | 0.10-0.20 | 0.01-0.03 | 0.02 | - | - |
| 4* | 9.5-10.5 | 0.15-0.25 | 0.30-0.40 | 0.05-0.15 | 0.25-0.40 | 0.15-0.30 | 0.10-0.20 | 0.01-0.03 | 0.02 | - | - |
| 5 | 9.5-10.5 | 0.15-0.25 | 0.30-0.40 | 0.05-0.15 | 0.15-0.30 | 0.15-0.30 | 0.25-0.35 | 0.01-0.03 | 0.02 | - | - |
| 6* | 9.5-10.5 | 0.15-0.25 | 0.01 | 0.05-0.15 | 0.25-0.40 | 0.15-0.30 | 0.10-0.20 | 0.01-0.03 | 0.02 | - | - |
| 7* | 9.5-10.5 | 0.30-0.50 | 0.01 | 0.05-0.15 | 0.15-0.30 | 0.15-0.30 | 0.10-0.20 | 0.01-0.03 | 0.02 | - | - |
| 8* | 9.5-10.5 | 0.50-0.90 | 0.01 | 0.05-0.15 | 0.15-0.30 | 0.15-0.30 | 0.10-0.20 | 0.01-0.03 | 0.02 | - | - |
| 9* | 9.5-10.5 | 0.15-0.25 | 0.01 | 0.05-0.15 | 0.01-0.05 | 0.15-0.30 | 0.10-0.20 | 0.08-0.12 | 0.02 | - | - |
| 10* | 9.5-10.5 | 0.15-0.25 | 0.30-0.40 | 0.05-0.15 | 0.01-0.05 | 0.15-0.30 | 0.10-0.20 | 0.08-0.12 | 0.02 | - | - |
| 11* | 9.5-10.5 | 0.30-0.50 | 0.01 | 0.05-0.15 | 0.01-0.05 | 0.15-0.30 | 0.10-0.20 | 0.08-0.12 | 0.02 | - | - |
| 12* | 9.5-10.5 | 0.50-0.90 | 0.01 | 0.05-0.15 | 0.05-0.15 | 0.15-0.30 | 0.10-0.20 | 0.08-0.12 | 0.02 | - | - |
| 13* | 9.5-10.5 | 0.20-0.25 | 0.01 | 0.05-0.15 | 0.05-0.15 | 0.15-0.30 | 0.10-0.20 | 0.08-0.12 | 0.02 | - | - |
| 14* | 9.5-10.5 | 0.15-0.30 | 0.30-0.50 | 0.05-0.15 | 0.05-0.15 | 0.05 | 0.10-0.20 | - | - | 0.0004-0.10 | 0.05-0.20 |
| A | 9-11 | 0.3-0.4 | 0.05-0.15 | 0.05-0.15 | 0.01-0.05 | 0.01-0.10 | 0.01-0.03 | 0.01-0.03 | 0.02 | | |

All expressed as wt. %. Up to 0.15 wt. % impurities; remainder Al. * not according to the invention

The cladding layer compositions in Table 6 were produced using a direct chill casting process to cast an ingot. The ingots were then homogenized, hot rolled, and cold rolled according to the methods described herein to produce a final gauge aluminum alloy product.

The cladding layers described in Table 6 were used to produce a clad aluminum alloy product (e.g., a clad sheet aluminum alloy) comprising a cladding layer and a core layer. The core layer comprised a 3xxx series aluminum alloy having the composition shown in Table 7.

**Table 7**

| **Core** | **Si** | **Fe** | **Cu** | **Mn** | **Mg** | **Zn** | **Ti** |
|---|---|---|---|---|---|---|---|
| | 0.03 - 0.09 | 0.14 - 0.24 | 0.50 - 0.56 | 1.45 - 1.58 | 0.07 - 0.13 | Up to 0.4 | 0.005 - .030 |

The core layer was prepared according to the method described below. The core aluminum alloy composition of Table 7 was direct chill cast to produce an ingot. The ingot was subsequently scalped. The scalped ingots were thereafter heated to a homogenization temperature from about 480 °C to about 520 °C in about 12 hours. The ingots were soaked at the homogenization temperature for about 5 hours to about 6 hours. The homogenized ingots were then hot rolled to a gauge thickness of 19 mm. The clad aluminum alloys described in Table 6 were then welded to one side of the 19 mm thick core layer to produce a clad aluminum alloy product. After welding, the clad aluminum alloy product was reheated to a temperature of about 450 °C for about 45 to about 60 minutes, followed by hot rolling the clad aluminum alloy product to a gauge thickness of about 3 mm to about 4 mm. The clad aluminum alloy product was subsequently cold rolled to an initial gauge thickness of about 1 mm to about 2 mm. Then, the clad aluminum alloy product was further cold rolled to a final gauge thickness of about 300 µm. The cladding layer had a gauge thickness of about 25 µm to about 30 µm and was about 7 % to about 13 % of the total thickness of the clad aluminum alloy product. The final gauge aluminum alloy product was partially annealed at a temperature ramp of 30° C per hour followed by a three-hour soak at 305° C to achieve an H24 temper condition.

The cladding layer(s) of the clad aluminum alloy product described herein controls the melting of the filler material, promotes pore formation in an oxide film layer of a metal part to be joined to the clad aluminum alloy product, and transports promoter agents to interface with the oxide film during brazing applications. Specifically, the alloy composition of the cladding layer includes specific amounts of Mg, Bi, Sb, Sr, Na, and/or Ti constituents that can be especially useful as a filler alloy for fluxless brazing applications. For example, low amounts of Mg (e.g., less than 0.50 wt. %) in combination with Bi, Sb, Sr, Na, and/or Ti, synergistically work to crack the surface oxide layer such that the melted clad aluminum alloy flows through the cracks to form stable braze joints without the use of flux. The clad aluminum alloy products described herein can also be used in other situations where mechanical strength in combination with corrosion resistance are desired.

Table 8 below shows the onset temperature and melting point of the cladding layer of Alloys 1-14 and Comparative Alloy A.

**Table 8**

| **Alloy** | **Onset (° C)** | **Melting Point (° C)** |
|---|---|---|
| 1* | 570.63 | 652.18 |
| 2* | 573.07 | 653.87 |
| 3* | 570.02 | 653.10 |
| 4* | 567.49 | 652.85 |
| 5 | 568.76 | 652.18 |
| 6* | 569.8 | 652.60 |
| 7* | 571.07 | 652.80 |
| 8* | 569.45 | 633.75 |
| 9* | 571.58 | 654.35 |
| 10* | 567.37 | 652.70 |
| 11* | 573.84 | 657.02 |
| 12* | 571.6 | 653.48 |
| 13* | 572.25 | 654.74 |
| 14* | 574.18 | 655.42 |
| A | 571.3 | 654.97 |

| | | |
|---|---|---|
| *not according to the invention | | |

The cladding layers of Examples 1-14 had an onset temperature of less than 575 °C. The onset temperatures of the cladding layers of Examples 1-14 are advantageous for producing a good brazed joint. The cladding layers of Examples 1-14 have an onset temperature, which promotes good spread of the molten cladding layer between the core layer and other components in an aluminum alloy product (e.g., an heat exchanger). Therefore, the cladding layers of Examples 1-14 can advantageously promote good braze joint formation between the core layer and other components in an aluminum alloy product. Additionally, cladding layers of Examples 1-14 had a melting temperature from 630 °C to 660 °C. Therefore, the cladding layers of Examples 1-14 exhibit increased flowability when molten to form good braze joints.

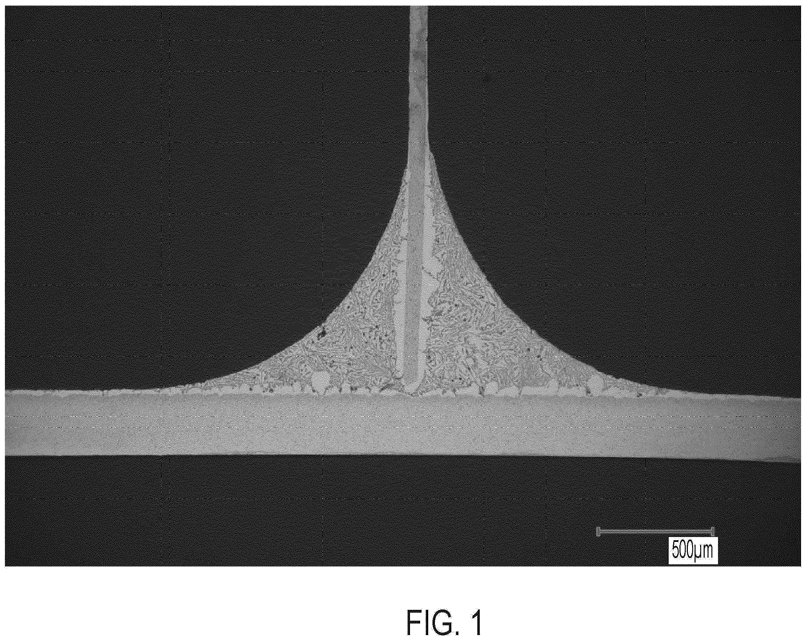

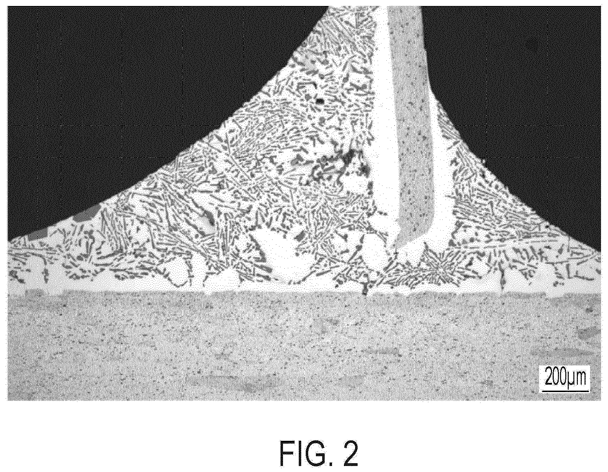

This is further evidenced by Figs. 1 and 2 which show optical images of example braze joints formed from the clad aluminum alloy products described herein, taken using Keyence and Zeiss Optical microscopes at 100x magnification, respectively. Specifically, clad aluminum alloy products comprising the cladding layer of Example Alloys 4 and 6 were subjected to a brazing process to produce the joints shown in Figs. 1 and 2, respectively. The brazing process was carried out in a CAB furnace at dry atmosphere with little or no oxygen in the atmosphere. The clad aluminum alloy product was heated in the CAB furnace at a temperature from about 600 °C to about 605 °C for about 3 minutes to about 5 minutes, followed by air cooling. As shown, Example Alloys 4 and 6 formed excellent braze joints without the use of flux. When heated to a sufficiently high temperature for a sufficient period of time, the cladding layer(s) of the clad aluminum alloy product is melted to form a filler metal which forms the braze joint between the parts being joined by brazing. As previously indicated, the promoter agents incorporated in the cladding layer improved the quality of the braze joint.

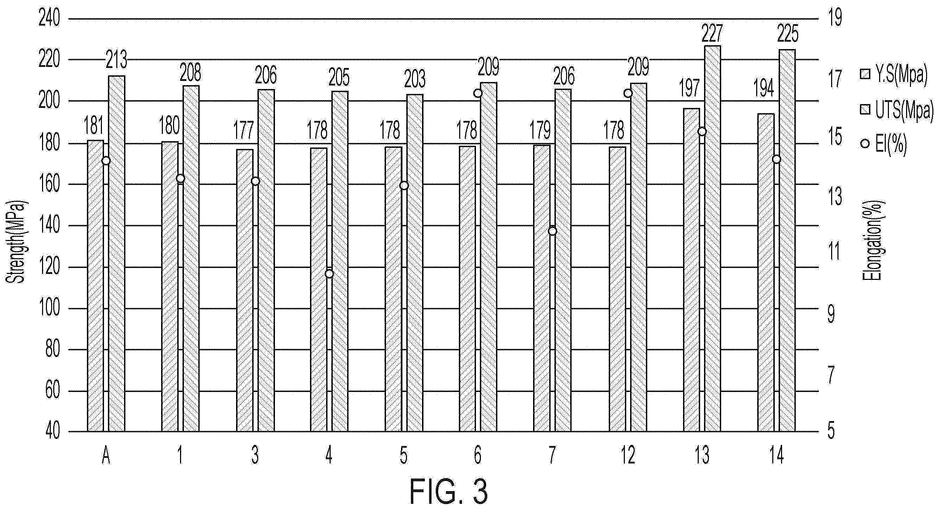

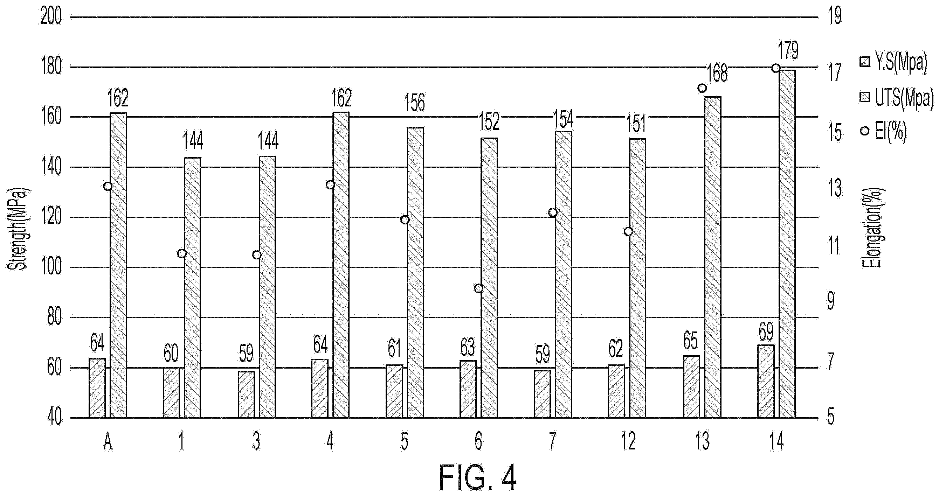

Tensile properties of each of Example Alloys 1, 3-7, 12, 13, 14, and Comparative Example 14 were determined after the clad aluminum alloys were partially annealed to a H24 temper, and after a brazing process. Measured tensile properties included the yield strength, percent elongation, and ultimate tensile strength. FIG. 3 provides the tensile properties of the clad aluminum alloys in an H24 temper and FIG. 4 provides the tensile properties of the post-brazed clad aluminum alloys. From these results, the yield strength (YS) of Example Alloys 1, 3-7, 12, 13, and 14 were comparable to Comparative Alloy A. Similarly, the ultimate tensile strength (UTS) and elongation (EL) properties of Example Alloys 1, 3-7, and 12 were comparable to Comparative Alloy A. Example Alloys 13 and 14 exhibited a higher UTS and elongation than Comparative Alloy A.

Example Alloys 1, 3-7, 12-14, and Comparative Example A were tested for potential values for open circuit corrosion according to ASTM G69 standards. The difference in the corrosion potential between the dense precipitate band (DPB) and the cladding layer was measured. The DPB measurements were carried out by grinding and polishing to ensure that the exposed surface was within the DPB area. Additionally, corrosion in relation to air (SWAAT) was carried out in accordance with Annex 3 of the ASTM G85 standard. Acidified synthetic seawater having a pH of 2.8-3.0 (42 g / l of synthetic sea salt + 10 ml / l of glacial acetic acid) was used. The samples were then cleaned in 50% metric acid for one hour, sectioned at four different places and examined for corrosion. To assess the severity of the corrosion after having submitted the samples to the SWAAT trials, a qualitative scale was used, in which the corrosion was characterized as: in order, low, moderate, severe and very severe. The severity of the corrosion was characterized as: (i) low: for corrosion occurrence within the DPB region; (ii) moderate: for corrosion occurrence that just consumed the DPB region; (iii) severe: for corrosion occurrence that consumed up to one quarter to one third of the core thickness without perforation; and (iv) very severe for corrosion occurrence which led to perforation. The open circuit potential (OCP) corrosion values and the SWAAT test results for Example Alloys 1, 3-7, 12-14, and Comparative Example A are provided in Table 9.

**Table 9**

| **Alloy** | **OCP (mV)** | **SWAAT Testing** | | |
|---|---|---|---|---|
| | | **2 weeks** | **3 weeks** | **4 weeks** |
| 1* | -694 | Low | Moderate | Moderate |
| 3* | -687 | Low | Moderate | Moderate |
| 4* | -693 | Low | Moderate | Moderate |
| 5 | -693 | Low | Moderate | Severe |
| 6* | -694 | Low | Moderate | Moderate |
| 7* | -696 | Low | Moderate | Moderate |
| 12* | -673 | Low | Moderate | Severe |
| 13* | -672 | Low | Moderate | Moderate |
| 14* | -677 | Low | Moderate | Moderate |
| A | -687 | Low | Very Severe | Very Severe |

| | | | | |
|---|---|---|---|---|
| * not according to the invention | | | | |

As shown in Table 9, the example alloys had a corrosion potential from -672 to -696 mV. The corrosion potential values of Examples 1-14 indicate that the residual clad layer has a corrosion potential typical of 4xxx series aluminum alloy and will act sacrificially to effectively protect a core alloy. Specifically, Example Alloys 3, 4, 6, 7, 13 and 14 had less negative corrosion potential than Comparative Alloy A. In practical applications, when clad aluminum alloy products, produced with the cladding layers of Example Alloys 3, 4, 6, 7, 13 and 14, are coupled with fin stock that has a more negative corrosion potential, the fin stock will act sacrificial to the clad layer and protect a heat-exchanger part (e.g., tube) from corrosion. In some embodiments, the fin stock can include zinc, aluminum, or combinations thereof. In some embodiments, the fin stock can comprise about 1 wt. % to about 10 wt. % Zn (e.g., from 1.1 wt. % to 8 wt. %, from 1.2 wt. % to 6 wt. %, from 1.3 wt. % to 5 wt. %, from 1.4 wt. % to 4 wt. %, or from 1.5 wt. % to 3.5 wt. %).

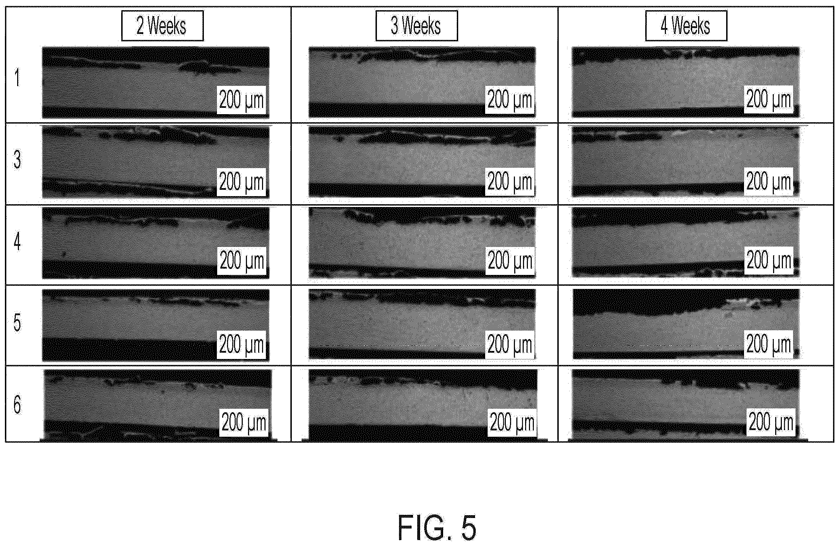

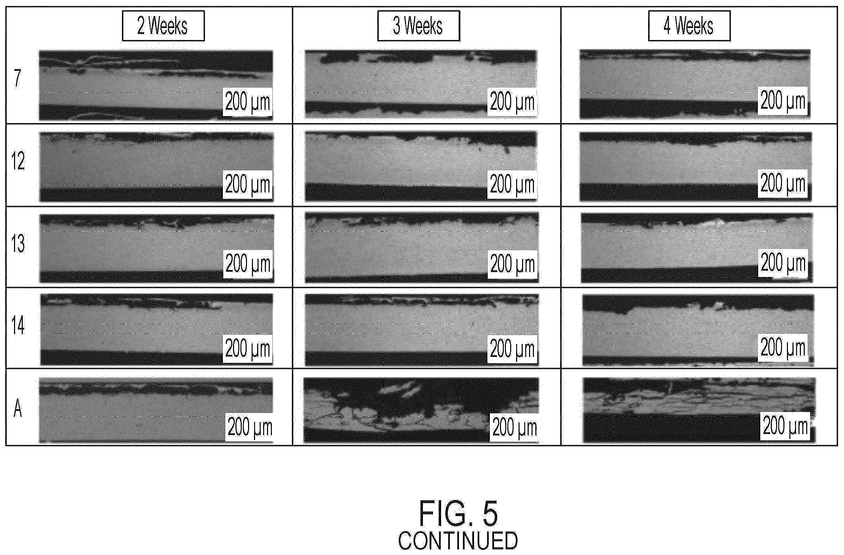

The results of the SWAAT test are summarized in FIG. 5. FIG. 5 shows a schematic representation of the results of metallographic examinations of SWAAT corrosion tests for Example Alloys 1, 3-7, 12, 13, 14, and Comparative Example A after 2 weeks, 3 weeks, and 4 weeks, as presented in Table 9. Each of Example Alloys 1, 3-7, 12, 13, and 14 exhibited better corrosion resistance than Comparative Alloy A after 2 weeks, 3 weeks, and 4 weeks. FIG. 5 demonstrates that cladding layer(s) of the clad aluminum alloy products described herein can produce brazing joints that resist corrosion better than conventional cladding alloys without the use of corrosive flux. As discussed herein, the improved corrosion resistance is due to the presence of the promoters in the cladding alloys used in the clad aluminum alloy products, in comparison to conventional cladding alloys, that can act as a protective anti-corrosion coating in the parts and objects subjected to brazing. When present in specific quantities in the cladding layer(s) of the clad aluminum alloy products, there is no need for flux operation when brazing a joint between the clad aluminum alloy product and the metal part to be joined. Since no flux operation is required when producing the braze joint, the corrosion potential of the clad aluminum alloy products is improved because flux negatively affects the corrosion potential of the joint.

## Claims

1. An aluminum alloy comprising 9.0 - 10.5 wt. % Si, 0.15 - 0.25 wt. % Fe, 0.30 - 0.40 wt. % Cu, 0.05 - 0.15 wt. % Mn, 0.15 - 0.30 wt. % Mg, 0.15 - 0.30 wt. % Zn, 0.10 - 0.35 wt. % Bi, up to 0.15 wt. % Sb, up to 0.05 wt. % Sr, up to 0.05 wt. % Na, up to 0.10 wt. % Ti, up to 0.15 wt. % of impurities, and balance Al.

2. The aluminum alloy of claim 1, wherein the aluminum alloy is produced by direct chill casting, followed by hot rolling and cold rolling.

3. A clad aluminum alloy product, comprising:
a core layer; and
at least one cladding layer comprising the aluminum alloy of claim 1 or 2.

4. The clad aluminum alloy product of claim 3, wherein the core layer comprises an aluminum alloy comprising up to 0.25 wt. % Si, up to 0.35 wt. % Fe, 0.50 wt. % to 0.60 wt. % Cu, 1.4 wt. % to 1.6 wt. % Mn, 0.06 wt. % to 0.62 wt. % Mg, up to 0.05 wt. % Cr, up to 0.04 wt. % Zn, 0.10 wt. % to 0.20 wt. % Ti, up to 0.05 wt. % Sr, up to 0.15 wt. % of impurities, and balance Al.

5. A clad aluminum alloy product, comprising:
a core layer, wherein the core layer has a first side and a second side;
at least one cladding layer on the first side or the second side;
wherein the at least one cladding layer comprises 9.0 - 10.5 wt. % Si, 0.15 - 0.25 wt. % Fe, 0.30 - 0.40 wt. % Cu, 0.05 - 0.15 wt. % Mn, 0.15 - 0.30 wt. % Mg, 0.15 - 0.30 wt. % Zn, 0.10 - 0.35 wt. % Bi, up to 0.15 wt. % Sb, up to 0.05 wt. % Sr, up to 0.05 wt. % Na, up to 0.10 wt. % Ti, up to 0.15 wt. % of impurities, and balance Al.

6. The clad aluminum alloy product of claim 5, wherein the core layer comprises an aluminum alloy comprising up to 0.25 wt. % Si, up to 0.35 wt. % Fe, 0.50 wt. % to 0.60 wt. % Cu, 1.4 wt. % to 1.6 wt. % Mn, 0.06 wt. % to 0.62 wt. % Mg, up to 0.05 wt. % Cr, up to 0.04 wt. % Zn, 0.10 wt. % to 0.20 wt. % Ti, up to 0.05 wt. % Sr, up to 0.15 wt. % of impurities, and balance Al.

7. A corrosion resistant brazing sheet comprising the clad aluminum alloy product of claim 5 or 6.

8. A heat exchanger comprising the clad aluminum alloy product of claim 5 or 6.

9. A method of forming a brazing joint, comprising the steps of:
providing one or more metal parts;
providing a clad aluminum alloy product on or between the one or more metal parts to form an assembly, wherein the clad aluminum alloy product comprises at least one cladding layer;
brazing the assembly without applying flux to join the clad aluminum alloy product and the one or more metal parts to produce a brazed assembly; and
cooling the brazed assembly,
wherein the at least one cladding layer comprises 9.0 - 10.5 wt. % Si, 0.15 - 0.25 wt. % Fe, 0.30 - 0.40 wt. % Cu, 0.05 - 0.15 wt. % Mn, 0.15 - 0.30 wt. % Mg, 0.15 - 0.30 wt. % Zn, 0.10 - 0.35 wt. % Bi, up to 0.15 wt. % Sb, up to 0.05 wt. % Sr, up to 0.05 wt. % Na, up to 0.10 wt. % Ti, up to 0.15 wt. % of impurities, and balance Al.

10. The method of claim 9, wherein brazing occurs in a controlled atmosphere brazing furnace comprising an inert gas, wherein the controlled atmosphere brazing furnace comprises less than 100 ppm oxygen; and/or
wherein the controlled atmosphere brazing furnace has a dew point of less than -40° C.

11. The method of claim 9 or 10, wherein the assembly is brazed at a brazing temperature from 590° C to 610° C, wherein the controlled atmosphere brazing furnace is heated to the brazing temperature in less than five minutes; and/or
wherein the assembly is brazed for 3 minutes at 600° C in the controlled atmosphere brazing furnace having an oxygen concentration less than 50 ppm and a dew point less than -40° C in a nitrogen atmosphere.

## Patentansprüche

1. Aluminiumlegierung, umfassend 9,0 - 10,5 Gew.-% Si, 0,15 - 0,25 Gew.-% Fe, 0,30 - 0,40 Gew.-% Cu, 0,05 - 0,15 Gew.-% Mn, 0,15 - 0,30 Gew.-% Mg, 0,15 - 0,30 Gew.-% Zn, 0,10 - 0,35 Gew.-% Bi, bis zu 0,15 Gew.-% Sb, bis zu 0,05 Gew.-% Sr, bis zu 0,05 Gew.-% Na, bis zu 0,10 Gew.-% Ti, bis zu 0,15 Gew.-% Verunreinigungen, und Rest Al.

2. Aluminiumlegierung nach Anspruch 1, wobei die Aluminiumlegierung durch direktes Kokillengießen, gefolgt von Warmwalzen und Kaltwalzen, hergestellt wird.

3. Plattiertes Aluminiumlegierungsprodukt, umfassend:
eine Kernschicht; und
mindestens eine Plattierungsschicht, die die Aluminiumlegierung nach Anspruch 1 oder 2 umfasst.

4. Plattiertes Aluminiumlegierungsprodukt nach Anspruch 3, wobei die Kernschicht eine Aluminiumlegierung umfasst, die bis zu 0,25 Gew.-% Si, bis zu 0,35 Gew.-% Fe, 0,50 Gew.-% bis 0,60 Gew.-% Cu, 1,4 wt. % bis 1,6 Gew.-% Mn, 0,06 Gew.-% bis 0,62 Gew.-% Mg, bis zu 0,05 Gew.-% Cr, bis zu 0,04 Gew.-% Zn, 0,10 Gew.-% bis 0,20 Gew.-% Ti, bis zu 0,05 Gew.-% Sr, bis zu 0,15 Gew.-% Verunreinigungen, und Rest Al umfasst.

5. Plattiertes Aluminiumlegierungsprodukt, umfassend:
eine Kernschicht, wobei die Kernschicht eine erste Seite und eine zweite Seite aufweist;
mindestens eine Plattierungsschicht auf der ersten Seite oder der zweiten Seite;
wobei die mindestens eine Plattierungsschicht 9,0 - 10,5 Gew.-% Si, 0,15 - 0,25 Gew.-% Fe, 0,30 - 0,40 Gew.-% Cu, 0,05 - 0,15 Gew. % Mn, 0,15 - 0,30 Gew. % Mg, 0,15 - 0,30 Gew.-% Zn, 0,10 - 0,35 Gew.% Bi, bis zu 0,15 Gew.% Sb, bis zu 0,05 Gew.-% Sr, bis zu 0,05 Gew.-% Na, bis zu 0,10 Gew.-% Ti, bis zu 0,15 Gew.-% Verunreinigungen, und Rest Al umfasst.

6. Plattiertes Aluminiumlegierungsprodukt nach Anspruch 5, wobei die Kernschicht eine Aluminiumlegierung umfasst, die bis zu 0,25 Gew.-% Si, bis zu 0,35 Gew.-% Fe, 0,50 Gew.-% bis 0,60 Gew.-% Cu, 1,4 Gew.-% bis 1,6 Gew.-% Mn, 0,06 Gew.-% bis 0,62 Gew.-% Mg, bis zu 0,05 Gew.-% Cr, bis zu 0,04 Gew.-% Zn, 0,10 Gew.-% bis 0,20 Gew.-% Ti, bis zu 0,05 Gew.-% Sr, bis zu 0,15 Gew.-% Verunreinigungen, und Rest Al umfasst.

7. Korrosionsbeständiges Lötblech, das das plattierte Aluminiumlegierungsprodukt nach Anspruch 5 oder 6 umfasst.

8. Wärmeaustauscher, der das plattierte Aluminiumlegierungsprodukt nach Anspruch 5 oder 6 umfasst.

9. Verfahren zum Herstellen einer Lötverbindung, das die folgenden Schritte umfasst:
Bereitstellen eines oder mehrerer Metallteile;
Bereitstellen eines plattierten Aluminiumlegierungsprodukts auf oder zwischen dem einen oder den mehreren Metallteilen, um eine Anordnung zu bilden, wobei das plattierte Aluminiumlegierungsprodukt mindestens eine Plattierungsschicht umfasst;
Löten der Anordnung ohne Anwenden von Flussmittel, um das plattierte Aluminiumlegierungsprodukt und das eine oder die mehreren Metallteile zu verbinden, um eine gelötete Anordnung zu erzeugen; und
Kühlen der gelöteten Anordnung,
wobei die mindestens eine Plattierungsschicht 9,0 - 10,5 Gew.-% Si, 0,15 - 0,25 Gew.-% Fe, 0,30 - 0,40 Gew.-% Cu, 0,05 - 0,15 Gew.-% Mn, 0,15 - 0,30 Gew.-% Mg, 0,15 - 0,30 Gew.-% Zn, 0,10 - 0,35 Gew.-% Bi, bis zu 0,15 Gew.-% Sb, bis zu 0,05 Gew.-% Sr, bis zu 0,05 Gew.-% Na, bis zu 0,10 Gew.-% Ti, bis zu 0,15 Gew.-% Verunreinigungen, und Rest Al umfasst.

10. Verfahren nach Anspruch 9, wobei das Löten in einem Lötofen in einer kontrollierten Atmosphäre erfolgt, der ein Inertgas umfasst, wobei der Lötofen mit kontrollierter Atmosphäre weniger als 100 ppm Sauerstoff umfasst; und/oder
wobei der Lötofen mit kontrollierter Atmosphäre einen Taupunkt von weniger als -40° C aufweist.

11. Verfahren nach Anspruch 9 oder 10, wobei die Anordnung bei einer Löttemperatur von 590° C bis 610° C gelötet wird, wobei der Lötofen mit kontrollierter Atmosphäre in weniger als fünf Minuten auf die Löttemperatur aufgeheizt wird; und/oder
wobei die Anordnung 3 Minuten bei 600° C in einem Lötofen mit kontrollierter Atmosphäre mit einer Sauerstoffkonzentration von weniger als 50 ppm und einem Taupunkt von weniger als -40° C in einer Stickstoffatmosphäre gelötet wird.

## Revendications

1. Un alliage d'aluminium comprenant 9,0 - 10,5 % en poids de Si, 0,15 - 0,25 % en poids de Fe, 0,30 - 0,40 % en poids de Cu, 0,05 - 0,15 % en poids de Mn, 0,15 - 0,30 % en poids de Mg, 0,15 - 0,30 % en poids de Zn, 0,10 - 0,35 % en poids de Bi, jusqu'à 0,15 % en poids de Sb, jusqu'à 0,05 % en poids de Sr, jusqu'à 0,05 % en poids de Na, jusqu'à 0,10 % en poids de Ti, jusqu'à 0,15 % en poids d'impuretés, et le reste étant du AI.

2. L'alliage d'aluminium selon la revendication 1, dans lequel l'alliage d'aluminium est produit par coulée directe à froid, suivie d'un laminage à chaud et d'un laminage à froid.

3. Un produit en alliage d'aluminium revêtu, comprenant :
une couche centrale, et
au moins une couche de revêtement comprenant l'alliage d'aluminium selon la revendication 1 ou 2.

4. Le produit en alliage d'aluminium revêtu selon la revendication 3, dans lequel la couche centrale comprend un alliage d'aluminium comprenant jusqu'à 0,25 % en poids de Si, jusqu'à 0,35 % en poids de Fe, 0,50 -0,60 % en poids de Cu, 1,4 -1,6% en poids de Mn, 0,06 - 0,62 % en poids de Mg, jusqu'à 0,05 % en poids de Cr, jusqu'à 0,04 % en poids de Zn, 0,10 - 0,20 % en poids de Ti, jusqu'à 0,05 % en poids de Sr, jusqu'à 0,15 % en poids d'impuretés, et le reste étant du AI.

5. Un produit en alliage d'aluminium revêtu, comprenant :
une couche centrale, dans laquelle la couche centrale a un premier côté et un deuxième côté ;
au moins une couche de revêtement sur le premier côté ou le deuxième côté ;
dans lequel au moins une couche de revêtement comprend 9,0 - 10,5 % en poids de Si, 0,15 - 0,25 % en poids de Fe, 0,30 - 0,40 % en poids de Cu, 0,05 - 0,15 % en poids de Mn, 0,15 - 0,30 % en poids de Mg, 0,15 - 0,30 % en poids de Zn, 0,10 - 0,35 % en poids de Bi, jusqu'à 0,15 % en poids de Sb, jusqu'à 0,05 % en poids de Sr, jusqu'à 0,05 % en poids de Na, jusqu'à 0,10 % en poids de Ti, jusqu'à 0,15 % en poids d'impuretés, et le reste étant du AI.

6. Le produit en alliage d'aluminium revêtu selon la revendication 5, dans lequel la couche centrale comprend un alliage d'aluminium comprenant jusqu'à 0,25 % en poids de Si, jusqu'à 0,35 % en poids de Fe, 0,50 - 0,60 % en poids de Cu, 1,4 - 1,6 % en poids de Mn, 0,06 - 0,62 % en poids de Mg, jusqu'à 0,05 % en poids de Cr, jusqu'à 0,04 % en poids de Zn, 0,10 -0,20 % en poids de Ti, jusqu'à 0,05 % en poids de Sr, jusqu'à 0,15 % en poids d'impuretés, et le reste étant du AI.

7. Une tôle de brasage résistante à la corrosion comprenant le produit d'alliage d'aluminium revêtu selon la revendication 5 ou 6.

8. Un échangeur de chaleur comprenant le produit en alliage d'aluminium revêtu selon la revendication 5 ou 6.

9. Une méthode de formation d'un joint de brasage, comprenant les étapes suivantes :
fournir une ou plusieurs pièces métalliques ;
fournir un produit d'alliage d'aluminium revêtu sur ou entre ladite une ou les plusieurs pièces métalliques pour former un assemblage, dans lequel le produit d'alliage d'aluminium revêtu comprend au moins une couche de revêtement ;
braser l'assemblage sans appliquer de flux pour joindre le produit d'alliage d'aluminium revêtu et ladite une ou les plusieurs pièces métalliques pour produire un assemblage brasé ; et
refroidir l'assemblage brasé,
dans lequel ladite au moins une couche de revêtement comprend 9,0 - 10,5 % en poids de Si, 0,15 - 0,25 % en poids de Fe, 0,30 - 0,40 % en poids de Cu, 0,05 - 0,15 % en poids de Mn, 0,15 - 0,30 % en poids de Mg, 0,15 - 0,30 % en poids de Zn, 0,10 - 0,35 % en poids de Bi, jusqu'à 0,15 % en poids de Sb, jusqu'à 0,05 % en poids de Sr, jusqu'à 0,05 % en poids de Na, jusqu'à 0,10 % en poids de Ti, jusqu'à 0,15 % en poids d'impuretés, et le reste étant du AI.

10. La méthode selon la revendication 9, dans laquelle le brasage a lieu dans un four de brasage à atmosphère contrôlée comprenant un gaz inerte, dans laquelle le four de brasage à atmosphère contrôlée comprend moins de 100 ppm d'oxygène ; et/ou dans laquelle le four de brasage à atmosphère contrôlée a un point de rosée inférieur à -40 °C.

11. La méthode selon la revendication 9 ou 10, dans laquelle l'assemblage est brasé à une température de brasage de 590 °C à 610 °C, dans laquelle le four de brasage à atmosphère contrôlée est chauffé à la température de brasage en moins de 5 minutes ; et/ou
dans laquelle l'assemblage est brasé pendant 3 minutes à 600 °C dans le four de brasage à atmosphère contrôlée ayant une concentration d'oxygène inférieure à 50 ppm et un point de rosée inférieur à -40° C dans une atmosphère d'azote.
